# EUROPÄISCHE PATENTANMELDUNG

(11) **EP 2 362 196 A2**
(43) Veröffentlichungstag der Anmeldung: **31.08.2011**
(21) Anmeldenummer: 11155999.3
(22) Anmeldetag: 25.02.2011
(51) Int. Cl.: G01G 19/00

(54) **Verfahren und Vorrichtung zum Wiegen von Gegenständen unterschiedlicher Gewichtsklassen**

(30) Priorität: 26.02.2010 DE 102010002396
(71) Anmelder: SIEMENS AKTIENGESELLSCHAFT, 80333 München (DE)
(72) Erfinder: Schererz, Holger, 15345, Rehfelde (DE); Voss, Frank, 12623, Berlin (DE)

(57) **Zusammenfassung**

Verfahren und Vorrichtung zum Wiegen von Gegenständen unterschiedlicher Gewichtsklassen

Die Erfindung betrifft ein Verfahren und eine Vorrichtung zum Wiegen mindestens eines Gegenstands (Ps(1), Ps(2), ...), insbesondere einer Postsendung. Verwendet wird eine Waage, die in einer ersten Betriebsart einen Gegenstand mit einer ersten Toleranz zu wiegen vermag, falls der Gegenstand eine erste Eigenschaft aufweist. In einer zweiten Betriebsart vermag die Waage diesen Gegenstand dann mit einer zweiten Toleranz zu wiegen, falls der Gegenstand eine zweite Eigenschaft aufweist. Bevor ein zu wiegender Gegenstand in der ersten Betriebsart gewogen wird, wird geprüft, ob der Gegenstand die erste Eigenschaft besitzt (Schritt S4). Falls nicht ausgeschlossen wird, dass der Gegenstand die erste Eigenschaft besitzt, so wiegt die in der ersten Betriebsart betriebene Waage den Gegenstand (Schritt S2), und das Messergebnis wird als das Gewicht (Gew(1), Gew(2), ...) des Gegenstands verwendet. Ansonsten wird die Waage in die zweite Betriebsart umgeschaltet. Die Waage wiegt den erneut zugeführten Gegenstand. Besitzt der Gegenstand die zweite Eigenschaft, so wird dieser Messwert als das Gewicht des Gegenstands verwendet.

## Beschreibung

Die Erfindung betrifft ein Verfahren und eine Vorrichtung zum Wiegen von Gegenständen unterschiedlicher Gewichtsklassen, insbesondere von flachen Postsendungen unterschiedlicher Gewichtsklassen.

Die Aufgabe, das Gewicht eines Gegenstands zu wiegen, tritt z. B. dann auf, wenn der Gegenstand eine Postsendung ist und gegen ein Beförderungsentgelt zu transportieren ist. Die europäische Messgeräte-Richtlinie 2004/22/EG ("Measuring Instruments Directive", MID) verlangt, dass die Messgeräte, die die entgeltrelevanten Parameter eines zu transportierenden Gegenstands messen, bauartgeprüft und geeicht (kalibriert) sind.

In der Regel hängt das Beförderungsentgelt zum Transport eines Gegenstands von dessen Gewicht ab. Bekannt ist das Vorgehen, den Gegenstand zu wiegen und das Beförderungsentgelt abhängig von der gemessenen Masse zu bestimmen. Eine Waage misst die Auslenkung oder die Kraft, die der Gegenstand bewirkt bzw. ausübt.

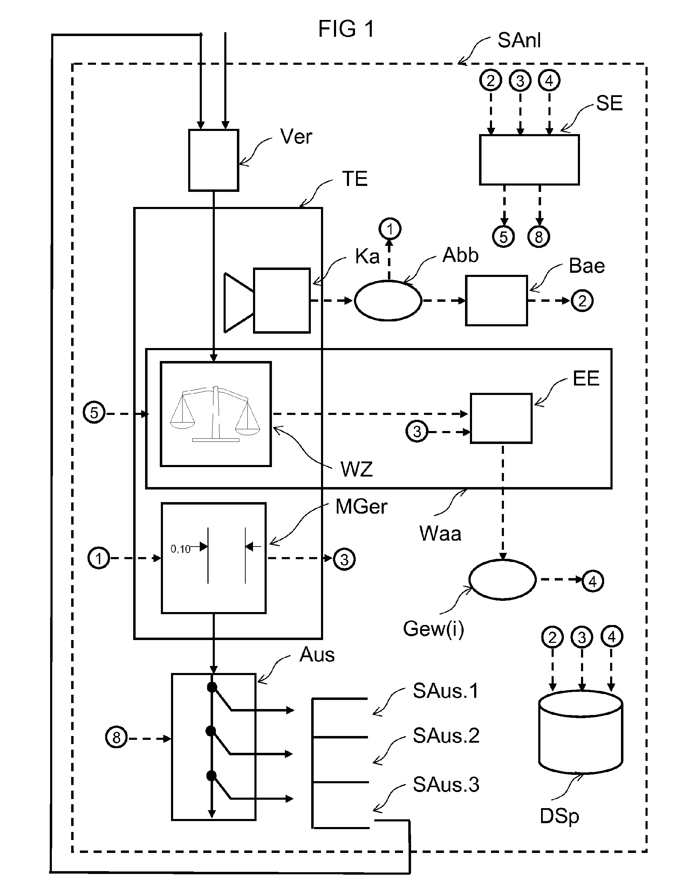

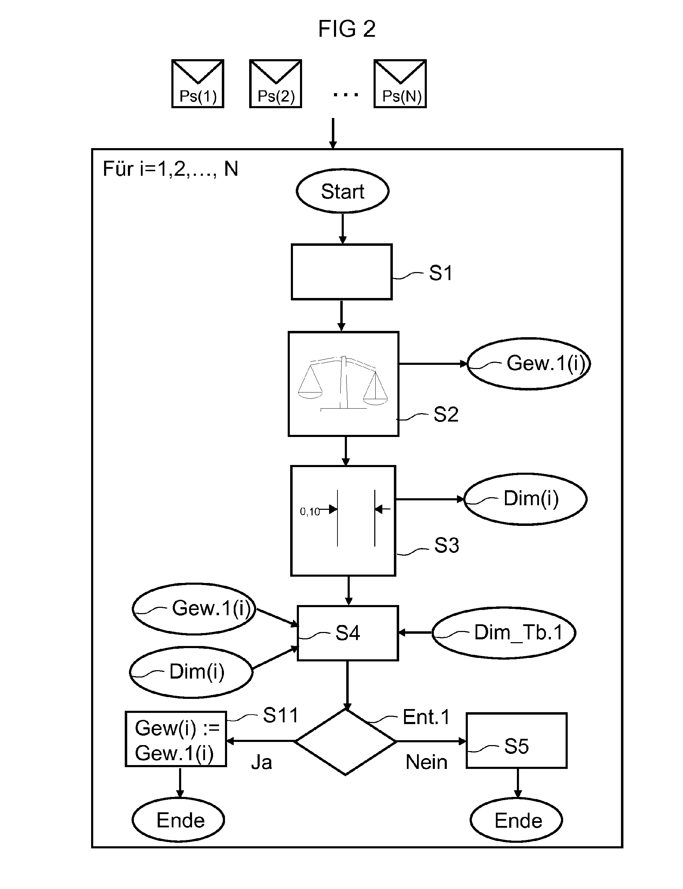

In DE 19860295 C2 werden ein Verfahren und eine Vorrichtung zur Steuerung einer dynamischen Waage beschrieben. Die Anordnung von Fig. 1 umfasst eine Waage 10, welche hochkant stehende Postsendungen wiegt. Eine Transporteinrichtung 4 transportiert die Postsendungen über die Waage hinweg. Fig. 2 zeigt ein Blockschaltbild der beschriebenen Vorrichtung. Eine Steuereinheit 20 steuert mittels eines Mikroprozessors 21 einen Motor 49 der Transporteinrichtung an und erhält Messdaten von einer Wiegezelle 7 der Waage 10 sowie von Sensoren S1, S2, welche die Bewegung von Postsendungen messen. Mittels eines Programmspeichers 22 rechnet die Waage 10 aus dem gemessenen Gewicht sowie aus weiteren postalischen Informationen ein Soll-Porto für eine Postsendung.

Mittels einer Eingabeeinheit, die in Fig. 3 gezeigt wird, gibt ein Benutzer postalische Informationen vor. Fig. 5 zeigt eine Bildschirm-Maske, um die Waage 10 einzustellen. Hierbei lassen sich verschiedene Modi für die Waage vorgeben, z. B. "Wiegen" und "Nicht-Wiegen". In einem weiteren Modus überwacht die Waage, ob eine Postsendung leichter als ein unterer Schwellwert oder schwerer als ein oberer Schwellwert ist, vgl. Fig. 7 bzw. Fig. 8. Derartige Postsendungen lassen sich dann ausschleusen. Außerdem kann ein Benutzer den Messbereich, die Mess-Toleranz und die Transportgeschwindigkeit vorgeben (Fig. 9). In einem Datenspeicher 23 sind empirisch ermittelte Zusammenhänge zwischen diesen zwei Parametern, nämlich Messbereich, Mess-Toleranz und Transportgeschwindigkeit, abgespeichert.

In US 5,174,398 und EP 495702 B1 wird eine Waage beschrieben, die sich in drei verschiedenen Modi betreiben lässt. Mittels einer Bedieneinheit mit einer Tastatur 12 vermag ein Benutzer einen Modus vorzugeben. Die Waage ("scale 16") liefert Messwerte an eine "CPU 10". Die "CPU 10" steuert ein "postage meter 18" sowie ein "display 20" an. Im ersten Modus ("shipping mode") misst die Waage 16 einen Gegenstand gröber ("coarse") als im zweiten Modus ("commercial mode"). Beispielsweise unterscheiden sich mögliche Messwerte im ersten Modus um 0,5 und im zweiten Modus um 0,1 Unze. In einer Ausgestaltung hängt die Genauigkeit, mit der die Waage ein Messergebnis ausgibt, vom Gewicht des zu wiegenden Gegenstands ab. In einem dritten Modus ("fast weighing mode") wird berücksichtigt, dass der Gegenstand auf der Waage oszilliert. Daher wird mehrmals hintereinander gewogen. Sobald die Messwerte alle in einem Toleranzbereich liegen, wird ein Mittelwert dieser Messwerte als Gewicht verwendet. Fig. 2 veranschaulicht, wie in den verschiedenen Modi inkrementell gemessen wird.

In DE 19911514 A1 wird eine Vorrichtung beschrieben, die das erforderliche Porto für eine Postsendung ermittelt und die Postsendung frankiert. Diese Vorrichtung vermag in zwei verschiedenen Modi zu arbeiten. Fig. 1 zeigt die Vorrichtung mit einer Verarbeitungseinheit 3, einer Ermittlungseinheit 2 und einer Frankiermaschine 4. Die Verarbeitungseinheit 3 misst Postsendungen mittels einer Wiegezelle 11 und misst außerdem die Abmessungen der Postsendung. Die Frankiermaschine 3 frankiert die Postsendungen. In der ersten Betriebsart ist in der Frankiermaschine 3 eine Porto-Gebührentabelle mit y verschiedenen Portowerten abgespeichert und wird verwendet. Die Frankiermaschine 3 verwendet n Eingangsdaten von einer Postsendung, um aus der Tabelle mit den y Portowerten den richtigen Portowert auszuwählen. In der zweiten Betriebsart verwendet die Frankiermaschine 3 eine reduzierte Tabelle mit nur x verschiedenen Portowerten und benötigt hier nur m < n Eingangsdaten, weswegen in der zweiten Betriebsart die Frankiermaschine schneller arbeitet.

Jedoch erfordert das Wiegen eine bestimmte Zeitspanne, weil die Waage sich auspendeln muss, ehe sie einen zuverlässigen Messwert liefert. Verschiedene Verfahren wurden vorgestellt, um diesen Nachteil zu kompensieren.

In US 6107579 wird ein Verfahren beschrieben, bei dem mehrere Waagen parallel arbeiten. Die zu wiegenden Gegenstände werden auf mindestens zwei parallele Transportpfade verteilt. In jedem Transportpfad befindet sich eine Waage. Die Transportpfade laufen in einem Vereinigungspunkt wieder zusammen. Dadurch wird erreicht, dass der Durchsatz durch die Vorrichtung um fast N-mal größer ist als der Durchsatz durch eine einzelne Waage, wobei N die Anzahl der parallel arbeitenden Waagen ist.

Außerdem wurden wiederholt Verfahren beschrieben, um den Gegenstand indirekt zu messen. Bei diesen Verfahren wird jeweils mindestens eine andere Messgröße gemessen, um Zeit einzusparen, und aus diesem Messergebnis wird das Gewicht berechnet.

In US 2004/0173386 A1 wird vorgeschlagen, das Format einer Postsendung zu messen und aus dem gemessenen Format die Masse zu berechnen.

Bei dem in US 7,162,459 B2 beschriebenen Verfahren wird das Volumen einer Postsendung gemessen. Aus diesem Volumen und einer vorgegebenen Dichte für Papier wird die Masse der Postsendung berechnet. Jedoch tritt das Problem auf, dass manch eine Postsendung nicht nur aus Papier besteht, sondern z. B. eine Scheckkarte oder ein Nummernschild enthält. Daher werden das Volumen und eine weitere Messgröße gemessen, z. B. die Biegesteifigkeit oder eine geometrische Messgröße für die "dimensional uniformity" der Postsendung oder auch elektromagnetische Eigenschaften der Postsendung in einem vorgegebenen Magnetfeld. Falls die weitere Messgröße eine Anomalie der Postsendung zeigt, so wird die Postsendung gesondert behandelt. Ansonsten wird das Gewicht aus dem Volumen der Postsendung und der vorgegebenen Dichte von Papier berechnet.

In DE 19858229 B4 werden ein Verfahren und eine Vorrichtung zum Wiegen von Gegenständen beschrieben. Der zu transportierende Gegenstand, in DE 19858229 B4 eine Postsendung, wird zunächst automatisch gewogen, und zwar mittels einer dynamischen Waage. Außerdem wird das Volumen der Postsendung ermittelt. Geprüft wird, ob die Postsendung ausreichend frankiert ist. Für diese Prüfung werden das gemessene Gewicht und das gemessene Volumen der Postsendung verwendet. Eine Postsendung, die nicht ausreichend frankiert ist, wird ausgeschleust. Das Gewicht einer ausgeschleusten Postsendung wird anschließend manuell gemessen, und zwar mittels einer statischen Waage.

In EP 1438145 B1 und EP 1438148 B1 wird ebenfalls ein Verfahren beschrieben, durch welches überprüft wird, ob eine Postsendung eine ausreichende Frankierung aufweist oder nicht. Diese Überprüfung wird automatisch mittels einer Sortieranlage durchgeführt, die eine Leseeinrichtung und eine Videocodiermaschine aufweist. Eine überprüfte Postsendung wird mit einem Entgeltsicherungscode versehen. Eine nicht ausreichend frankierte Postsendung wird ausgeschleust.

In US 2004/0054547 A1 wird beschrieben, wie ein Stapel Postsendungen ("batch of mail items") verarbeitet wird. Jede

Postsendung wird vermessen. Abhängig von den Messergebnissen wird ein Protokoll generiert und an einen Transporteur übersendet, der auch den Stapel transportiert.

In DE 10337164 A1 wird vorgeschlagen, in zwei Stufen graphische Informationen auszuwerten, die auf Postsendungen aufgebracht sind.

In EP 1619630 A2 wird ein Verfahren beschrieben, um das vorab entrichtete Porto für einen Frankierabdruck zurück zu erstatten, wenn der Frankierabdruck nicht nutzbar ist.

In WO 99/21138 A2 wird vorgeschlagen, noch nicht frankierte Postsendungen in einem Behälter zu sammeln und diese Postsendungen zu vermessen und zu frankieren. Dem Absender wird eine Rechnung zugestellt, die dieser automatisch bezahlen lassen kann.

Der Erfindung liegt die Aufgabe zugrunde, ein Verfahren und eine Vorrichtung bereitzustellen, um einen Gegenstand zu wiegen, wobei vor dem Wiegen nicht bekannt ist, in welcher von zwei vorgegebenen Gewichtsklassen das Gewicht des Gegenstands fällt, und wobei es nicht erforderlich ist, für jede Gewichtsklasse jeweils eine Waage zu verwenden.

Die Aufgabe wird durch ein Verfahren mit den Merkmalen des Anspruchs 1 und eine Vorrichtung mit den Merkmalen des Anspruchs 12 gelöst. Vorteilhafte Ausgestaltungen sind in den Unteransprüchen angegeben.

Lösungsgemäß wird mindestens ein Gegenstand mittels einer Waage gewogen. Diese Waage ist in einer ersten Betriebsart und in einer zweiten Betriebsart betreibbar. Wird die Waage in der ersten Betriebsart betrieben, so vermag die Waage jeden Gegenstand, der eine vorgegebene erste physikalische Eigenschaft aufweist, mit einer vorgegebenen ersten Toleranz zu wiegen. Wird die Waage in der zweiten Betriebsart betrieben, so vermag die Waage jeden Gegenstand, der eine vorgegebene zweite physikalische Eigenschaft aufweist, mit einer vorgegebenen zweiten Toleranz zu wiegen.

Für jeden zu wiegenden Gegenstand wird mindestens einer der beiden Schritte durchgeführt:
- Automatisch wird geprüft, ob der Gegenstand die erste Eigenschaft besitzt oder nicht.
- Die in der ersten Betriebsart betriebene Waage wiegt den Gegenstand.

Möglich ist, dass für jeden zu wiegenden Gegenstand beide Schritte durchgeführt werden. Möglich ist auch, zuerst die Prüfung durchzuführen und abhängig vom Ergebnis der Prüfung den Gegenstand in der ersten Betriebsart zu wiegen oder nicht.

Ein zu wiegender Gegenstand wird immer dann von der Waage in der ersten Betriebsart gewogen, wenn mindestens eine der beiden folgenden Bedingungen erfüllt ist:
- Entschieden oder vor dem Wiegen in der ersten Betriebsart wurde vorhergesagt, dass der Gegenstand die erste Eigenschaft besitzt.
- Der Schritt zu prüfen, ob der Gegenstand die erste Eigenschaft besitzt oder nicht, wurde vor dem Wiegen in der ersten Betriebsart nicht durchgeführt, d. h. jeder zu wiegende Gegenstand wird in der ersten Betriebsart gewogen.
Die Waage wird dann in die zweite Betriebsart umgeschaltet, wenn für mindestens einen zu wiegenden Gegenstand mindestens eine der folgenden beiden Bedingungen erfüllt ist:
- Der Schritt, dass die Waage in der ersten Betriebsart den Gegenstand wiegt, wurde nicht durchgeführt, weil bereits vor diesem Wiegen entschieden oder vorhergesagt wurde, dass der Gegenstand nicht die erste Eigenschaft besitzt.
- Nach dem Wiegen des Gegenstands in der ersten Betriebsart wurde entschieden, dass der Gegenstand die erste Eigenschaft nicht besitzt. Für diese Entscheidung wird bevorzugt der in der ersten Betriebsart verwendete Messwert verwendet.

Die in der zweiten Betriebsart betriebene Waage wiegt jeden zu wiegenden Gegenstand, der mindestens einer der folgenden beiden Bedingungen erfüllt:
- Der Gegenstand besitzt nicht die erste Eigenschaft.
- Der Gegenstand wurde nicht in der ersten Betriebsart gewogen.

Für jeden zu wiegenden Gegenstand wird als dessen Gewicht folgender Messwert verwendet:
- Als Gewicht wird dann der in der ersten Betriebsart gemessene Messwert verwendet, wenn entscheiden wurde, dass der Gegenstand die erste Eigenschaft besitzt.
- Als Gewicht wird dann der in der zweiten Betriebsart gemessene Messwert verwendet, wenn entscheiden wurde, dass der Gegenstand die zweite Eigenschaft besitzt.

Möglich ist, dass ein zu wiegender Gegenstand weder die erste noch die zweite Eigenschaft besitzt. Dann liefert das Verfahren kein Gewicht.

Das Verfahren lässt sich insbesondere dann anwenden, wenn ein Gewicht von einer zertifizierten Waage zu wiegen ist und diese Waage in bestimmten Betriebsarten bestimmte Gegenstände zu wiegen vermag.

Das Verfahren und die Vorrichtung gemäß der Lösung erfordern nur eine Waage. Daher vermeidet die Waage die Notwendigkeit, eine erste Waage für Gegenstände mit der ersten Eigenschaft und eine zweite Waage für Gegenstände mit der zweiten Eigenschaft bereitzustellen. Insbesondere macht die Erfindung es überflüssig, dass die Vorrichtung mehrere Waagen für unterschiedliche Gewichtsklassen aufweist. Weiterhin ist es nicht erforderlich, vor dem Wiegen einen Strom von Gegenständen auf mehrere Teilströme aufzuteilen und jeden Teilstrom zur jeweils einer Waage zu leiten. Diese eine Waage braucht darüber hinaus nicht dazu ausgestaltet zu sein, in einer einzigen Betriebsart alle Gegenstände mit einer vorgegebenen Toleranz wiegen zu können. Eine solche Universal-Waage ist oft auf dem Markt nicht verfügbar oder kostet zuviel oder erzielt nicht den erforderlichen Durchsatz von Gegenständen.

Weiterhin ist es dank der Erfindung nicht erforderlich, die Waage während eines Wiegevorgangs von der ersten Betriebsart in die zweite Betriebsart umzuschalten. Häufig ist dies während des Wiegevorgangs gar nicht möglich. Insbesondere ist es nicht erforderlich, die Waage umzuschalten, während der Gegenstand über die Waage hinweg oder auf andere Weise an der Waage vorbei transportiert wird und die Waage Signale aufzeichnet oder verarbeitet.

Dank der Erfindung ist es nicht erforderlich, während des laufenden Betriebs manuell eine Einstellung der Waage ändern zu müssen. Vielmehr vermag die Waage automatisch festzustellen, ob ein zu wiegender Gegenstand die erste physikalische Eigenschaft aufweist oder nicht, und die Waage lässt sich automatisch in der ersten Betriebsart oder in der zweiten Betriebsart betreiben.

Weil nur eine Waage benötigt wird, macht die Erfindung es überflüssig, zwei unterschiedliche Waagen parallel oder in Reihe zu schalten. Die Erfindung spart also die Verwendung unterschiedlicher Waagen ein. Darüber hinaus ist es dank der Erfindung nicht notwendig, eine Weiche und/oder zusätzliche Transportpfade vorzusehen. Weiterhin ist es zwar möglich, aber nicht zwingend erforderlich, die Gegenstände vorab in zwei Mengen zu unterteilen - eine erste Menge mit allen Gegenständen, die die erste Eigenschaft aufweisen, und eine zweite Menge mit allen Gegenständen, die die zweite Eigenschaft aufweisen.

Die Erfindung sieht vor, dass ein Gegenstand dann zweimal gewogen wird, wenn die Waage beim Betrieb in der ersten Betriebsart den Gegenstand nicht wiegt oder wenn festgestellt wurde, dass der Gegenstand die erste Eigenschaft nicht hat. Nicht erforderlich ist es, Vorwissen darüber zu verwenden, welche zu wiegenden Gegenstände die erste Eigenschaft haben und welche nicht.

Das Verfahren lässt sich in eine bestehende Verarbeitungseinrichtung mit einer Waage integrieren, wobei die Verarbeitungseinrichtung ursprünglich nur Gegenstände mit der ersten Eigenschaft verarbeiten und die ursprüngliche Waage nur diese Gegenstände während der Verarbeitung wiegen konnte. Damit diese Verarbeitungseinrichtung zusätzlich Gegenstände mit der zweiten Eigenschaft verarbeiten und wiegen kann, braucht lediglich die Waage angepasst zu werden. Jeder Gegenstand durchläuft genau so wie vor der Funktionserweiterung mindestens einmal die Verarbeitungseinrichtung. Gegenstände mit der zweiten Eigenschaft durchlaufen zweimal diese Verarbeitungseinrichtung, vorzugsweise beide Male auf demselben Transportpfad. Dadurch werden weder ein "Bypass" noch eine Verzögerungsstrecke noch eine Weiche benötigt. Möglich ist aber, einen "Bypass" vorzusehen, der benutzt wird, wenn die Waage in der ersten Betriebsart betrieben wird.

Das Verfahren erfordert nur dann einen erneuten Durchlauf des Gegenstands und einen erneuten Transport über die Waage hinweg oder auf andere Weise an der Waage vorbei, wenn vor oder nach dem Wiegen in der ersten Betriebsart festgestellt wird, dass der Gegenstand nicht die erste Eigenschaft aufweist. Vor dem Wiegen in der zweiten Betriebsart braucht nicht bekannt zu sein, ob der Gegenstand die zweite Eigenschaft aufweist oder nicht. Dieser erneute Durchlauf braucht um so seltener durchgeführt zu werden, je seltener Gegenstände der zweiten Eigenschaft und ohne die erste Eigenschaft zu verarbeiten sind.

Vorzugsweise gehören alle Gegenstände mit der ersten Eigenschaft zu einer ersten Gewichtsklasse, und alle Gegenstände mit der zweiten Eigenschaft gehören zu einer zweiten Gewichtsklasse. Ob ein Gegenstand die erste oder die zweite Eigenschaft oder keine von beiden aufweist, kann von mindestens einem weiteren Parameter abhängen, z. B. einer Abmessung oder einer Oberflächenbeschaffenheit oder einer Form oder Kontur des Gegenstands. Ein zu wiegender Gegenstand kann sowohl die erste als auch die zweite Eigenschaft besitzen. Ob ein Gegenstand die erste Eigenschaft besitzt oder nicht, kann vom Gewicht und von den Werten mehrerer weiterer physikalischer Parameter abhängen. Das entsprechende gilt für die zweite Eigenschaft.

Vorzugsweise wird der Gegenstand dann mit einer ersten Transportgeschwindigkeit an der Waage vorbei transportiert, wenn die Waage in der ersten Betriebsart betrieben wird. Der Gegenstand wird dann mit einer zweiten Transportgeschwindigkeit an der Waage vorbei transportiert, wenn die Waage in der zweiten Betriebsart betrieben wird. Vorzugsweise werden die Gegenstände hierbei über die Waage hinweg transportiert, damit die Gewichtskraft der Gegenstände in Richtung der Waage wirkt. Die erste Transportgeschwindigkeit ist größer als die zweite Transportgeschwindigkeit. Der Gegenstand wird in beiden Betriebsarten ohne abzustoppen über die Waage hinweg oder auf andere Weise an der Waage vorbei transportiert, und die Waage wiegt den transportierten Gegenstand. Diese Ausgestaltung ermöglicht einen hohen Durchsatz bei Einhaltung der vorgegebenen Toleranzen. Der Durchsatz ist dann besonders hoch, wenn deutlich mehr zu wiegende Gegenstände die erste Eigenschaft aufweisen, als es zu wiegende Gegenstände ohne die erste Eigenschaft gibt.

Vorzugsweise wird eine Menge von Gegenständen gewogen. Die Waage wird zunächst in der ersten Betriebsart betrieben und wiegt nacheinander die Gegenstände der Menge. Jeder Gegenstand, der nicht die erste Eigenschaft aufweist, wird erneut der Waage zugeführt. Eine Steuereinheit erhält also Messwerte von der Waage. In einem Transportpfad flussabwärts von der Waage ist eine Weiche angeordnet. Die Steuereinheit steuert die Weiche so an, dass die Weiche einen Gegenstand, der nicht die erste Eigenschaft aufweist, in einen Rückführungspfad leitet, der den Gegenstand zurück zur Waage transportiert. In einer Abwandlung werden nur diejenigen Gegenstände erneut der Waage zugeführt, die die zweite Eigenschaft und nicht die erste Eigenschaft besitzen.

Die nunmehr in der zweiten Betriebsart betriebene Waage wiegt nacheinander alle erneut zugeführten Gegenstände und somit auch alle diejenigen Gegenstände, die bislang von der Waage überhaupt nicht oder nicht mit einer vorgegebenen Toleranz gewogen wurden.

Vorzugsweise wird das Verfahren so ausgestaltet, dass die in der ersten Betriebsart betriebene Waage alle diejenigen Gegenstände zu wiegen vermag, deren jeweiliges Gewicht unterhalb einer Gewichts-Schranke liegt. Nur schwerere Gegenstände werden erst beim erneuten Durchlauf gewogen.

In einer Ausgestaltung wird das Messergebnis, welches die in der ersten Betriebsart betriebene Waage liefert, für die Entscheidung verwendet, ob ein zu wiegender Gegenstand die erste Eigenschaft aufweist oder nicht. Insbesondere wird das Messergebnis für die Entscheidung verwendet, ob der Gegenstand leichter als eine vorgegebene Gewichts-Schranke ist. Diese Ausgestaltung erspart einen "Bypass" um die Waage herum für Gegenstände, die nicht die erste Eigenschaft aufweisen. Weiterhin erspart die Ausgestaltung ein zusätzliches Messgerät für einen weiteren Parameter. Das Messergebnis der Waage kann zwar einen Messfehler besitzen, der größer als die erste Toleranz ist. Für die Entscheidung, ob der Gegenstand die erste Eigenschaft aufweist oder nicht, reicht dieses Messergebnis aber oft aus.

In einer anderen Ausgestaltung werden die Gegenstände vorab in zwei verschiedene Mengen aufgeteilt, und zwar eine erste Menge mit allen Gegenständen mit der ersten Eigenschaft und eine zweite Menge mit allen Gegenständen ohne die erste Eigenschaft. Diese Aufteilung lässt sich anhand des Gewichts oder eines anderen physikalischen Parameters durchführen, z. B. eine Abmessung des Gegenstands. Zunächst werden die Gegenstände der ersten Menge an der Waage vorbei transportiert, vorzugsweise über die Waage hinweg. Die in der ersten Betriebsart betriebene Waage wiegt alle Gegenstände der ersten Menge. Anschließend wird die Waage in die zweite Betriebsart umgeschaltet. Alle Gegenstände der zweiten Menge werden an der Waage vorbeitransportiert. Die Waage wiegt nunmehr alle Gegenstände der zweiten Menge.

Diese Ausgestaltung verhindert es, dass die Waage einen Gegenstand wiegen muss, während die Waage in der ersten Betriebsart betrieben wird, obwohl der Gegenstand die erste Eigenschaft nicht besitzt, also z. B. zu schwer oder zu groß ist.

Dadurch wird vermieden, dass das Wiegen eines schweren Gegenstands die Waage in länger andauernde Eigenschwingungen versetzt und dennoch dieser Messwert nicht verwendet werden kann, weil die Waage in der ersten Betriebsart betrieben wurde, das Gewicht des Gegenstands aber oberhalb einer Gewichts-Schranke liegt oder der Gegenstand eine zum Wiegen ungünstige Form oder Kontur oder Oberflächenbeschaffenheit aufweist.

In einer dritten Ausgestaltung werden zuvor alle Gegenstände über die in der ersten Betriebsart betriebene Waage hinweg transportiert. Die Waage wird aber ausgeschaltet und bevorzugt arretiert, bevor ein Gegenstand die Waage erreicht, der nicht die erste Eigenschaft aufweist. Die Waage wiegt diesen Gegenstand nicht. Bevor ein Gegenstand mit der ersten Eigenschaft die Waage erreicht, wird die Waage wieder eingeschaltet, und die Waage wiegt den Gegenstand. Diese Ausgestaltung vermeidet ebenfalls lange Eigenschwingungen durch einen schweren Gegenstand und vermeidet zugleich die Notwendigkeit, eine Weiche und einen "Bypass" vorzusehen.

Die Waage kann eine einzige Wiegezelle oder aber mehrere parallel geschaltete gleichartige Wiegezellen umfassen. Ein Strom von Gegenständen wird vor der Waage in mehrere Teilströme unterteilt, und die Teilströme werden wieder zu einem Strom zusammengefasst, und zwar vorzugsweise hinter der Waage. Jede Wiegezelle wiegt die Gegenstände eines Teilstroms.

Die Erfindung lässt sich z. B. für Postsendungen, Gepäckstücke von Reisenden, Frachtstücke z. B. für See-, Bahn- oder Lufttransport und zur Klassifikation von Gegenständen verwenden.

Im Folgenden wird die Erfindung anhand eines Ausführungsbeispiels beschrieben. Dabei zeigen:
- Fig. 1: schematisch eine verwendete Sortieranlage,
- Fig. 2: ein Flussdiagramm für die erste Ausgestaltung, bei der jede Postsendung über die in der ersten Betriebsart betriebenen Waage hinweg transportiert wird,

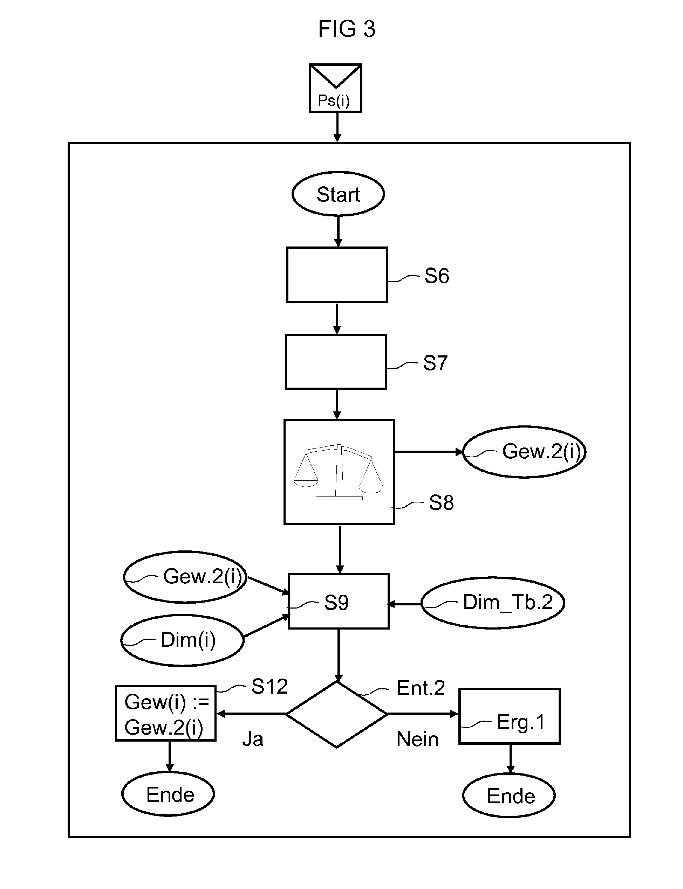

- Fig. 3: ein Flussdiagramm für den Schritt aus Fig. 2, einen Gegenstand in der zweiten Betriebsart zu wiegen,

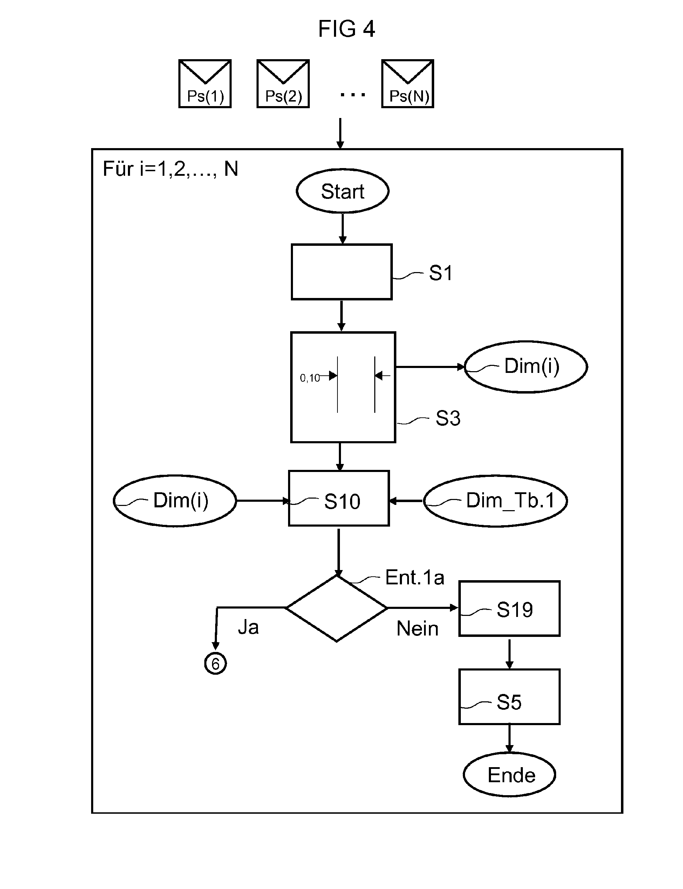

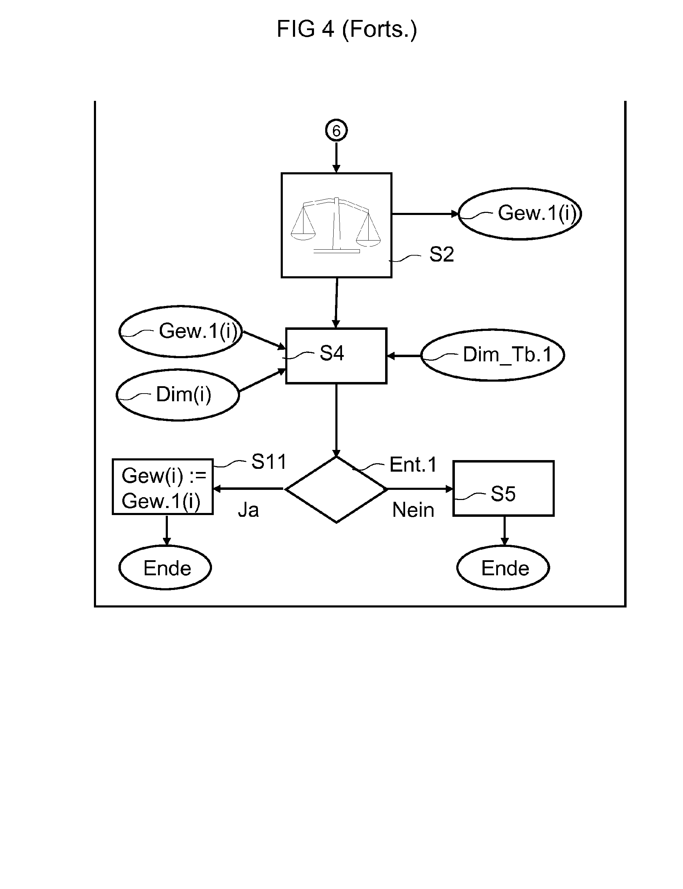

- Fig. 4: ein Flussdiagramm für eine Abwandlung, bei der die Waage in der ersten Betriebsart nur Gegenstände mit der ersten Eigenschaft wiegt, und

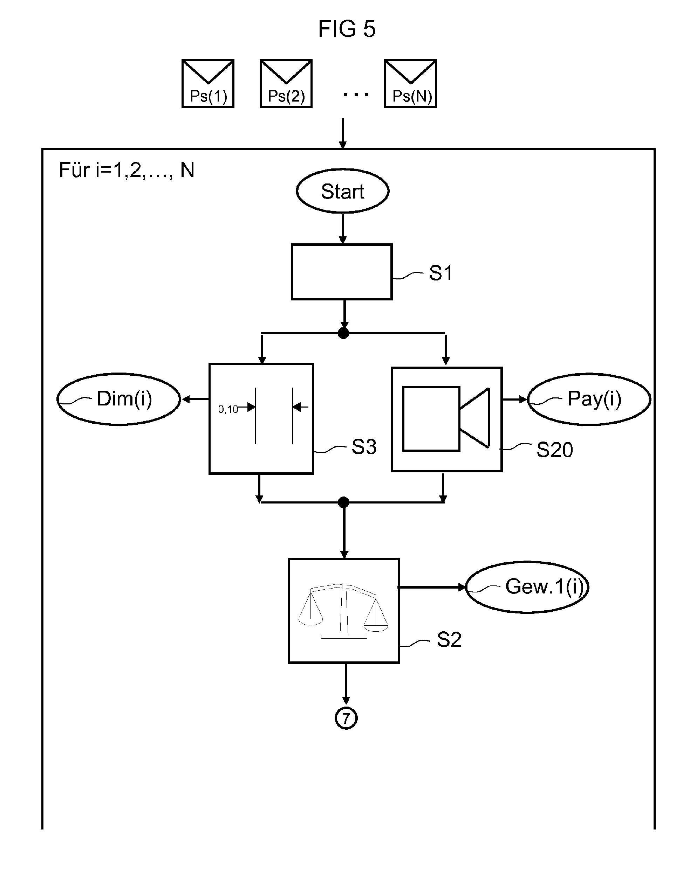

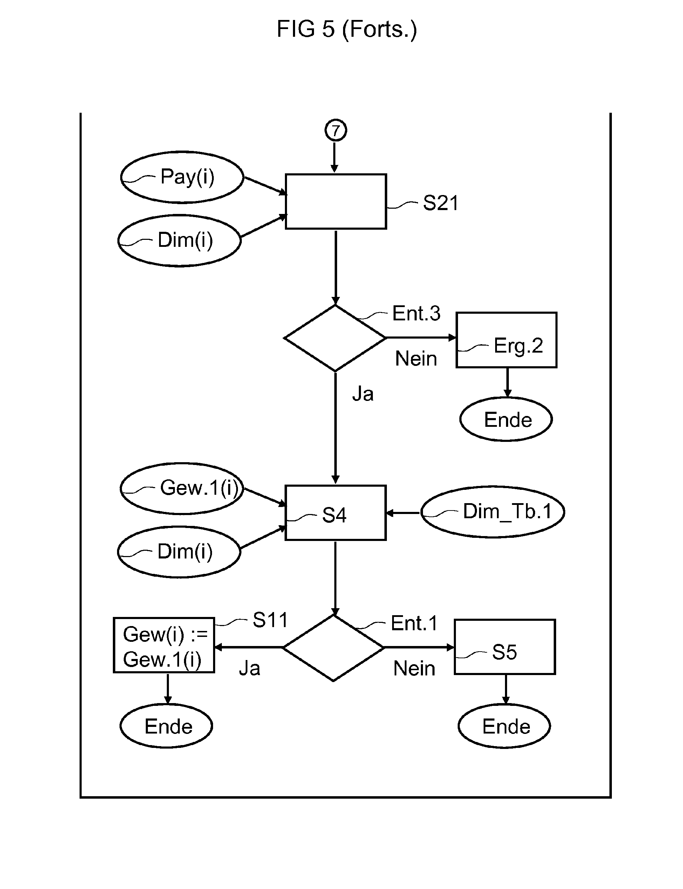

- Fig. 5: ein Flussdiagramm für eine Abwandlung, bei der nur solche Postsendungen MID-konform gewogen werden, die der Unterfrankierung verdächtig sind.

Im Ausführungsbeispiel wird das Verfahren verwendet, um eine Menge flacher Postsendungen (Standardbriefe, Großbriefe, Postkarten, Kataloge u. ä.) zu sortieren und während des Sortierens zu wiegen. Jede Postsendung soll an jeweils eine vorgegebene Zieladresse transportiert werden.

In einer Ausgestaltung hat der jeweilige Absender eine Postsendung mit einem Freimachungsvermerk (Briefmarke, Freistempler, codierter Freimachungsvermerk, "indicia") versehen. Dieser Freimachungsvermerk legt fest, welches Ist-Beförderungsentgelt der Absender bereits entrichtet hat, damit ein Transporteur die Postsendung transportiert. Das Ist-Beförderungsentgelt kann von einem Soll-Beförderungsentgelt abweichen. Dieses Soll-Beförderungsentgelt hängt von verschiedenen entgeltrelevanten Parametern ab, unter anderem von dem Gewicht der Postsendung. Der Transporteur, in der Regel ein Post-Dienstleister, möchte überprüfen, ob die Postsendung ausreichend frankiert ist, ob also das tatsächlich entrichtete Ist-Beförderungsentgelt größer oder gleich dem erforderlichen Soll-Beförderungsentgelt ist. Für diese Überprüfung ist die Postsendung zu wiegen. Denn das Soll-Beförderungsentgelt hängt vom Gewicht der Postsendung ab.

In einer anderen Ausgestaltung liefert ein einziger Absender eine Menge von Postsendungen ein. Diese Postsendungen sind vorzugsweise gleichartige Postsendungen, z. B. gleichartige Briefe oder verschiedene Exemplare derselben Ausgabe einer Zeitschrift oder eines Katalogs. Möglich ist auch, dass die Postsendungen von demselben Absender verschiedene Abmessungen aufweisen und/oder sich im Gewicht unterscheiden. Diese Postsendungen sind noch nicht mit Freimachungsvermerken versehen. Der Transporteur selber versieht die Postsendungen während des Transportierens mit Freimachungsvermerken und stellt nach dem Transportieren dem Absender eine Rechnung über das gesamte Beförderungsentgelt für alle Postsendungen. Vorzugsweise wird die Rechnung automatisch generiert. Auch diese Ausgestaltung erfordert, dass der Transporteur die Postsendungen wiegt, um das jeweilige Beförderungsentgelt zu berechnen.

Mindestens in diesem Fall ist der Transporteur gesetzlich verpflichtet, die entgeltrelevanten Parameter und insbesondere das Gewicht mit geeichten Messgeräten zu messen.

In beiden Ausgestaltungen müssen die Messinstrumente, die die entgeltrelevanten Parameter messen, insbesondere die verwendete Waage, bauartgeprüft und geeicht (kalibriert) sein. In Europa schreibt dies die oben genannte MID vor.

Die Postsendungen werden mit einer Sortieranlage sortiert. Diese Sortieranlage ermittelt die jeweilige Zieladresse jeder Postsendung und löst einen Weitertransport der Postsendung zu dieser Zieladresse aus.

Fig. 1 zeigt schematisch eine Sortieranlage, die zum Verarbeiten und Wiegen der Postsendungen verwendet wird. Diese Sortieranlage SAn1 umfasst folgende Bestandteile:
- einen Vereinzeler ("singulator") Ver, der Postsendungen vereinzelt, so dass ein Strom von zueinander beabstandeten und aufrecht stehenden Postsendungen den Vereinzeler verlässt,
- eine Kamera Ka, die jeweils ein rechnerverfügbares Abbild Abb von jeder Postsendung erzeugt,
- eine Bildauswerteeinheit Bae, die ein rechnerverfügbares Abbild Abb von einer Postsendung auswertet und die jeweilige Zieladresse in dem Abbild entziffert,
- ein Messgerät MGer, welches die Dicke und bei Bedarf weitere Abmessungen einer Postsendung misst und hierfür das Abbild Abb dieser Postsendung verwendet,
- eine Transport-Einrichtung TE,
- eine Waage Waa,
- eine Ausschleus-Einrichtung Aus,
- beispielhafte drei Sortierausgänge SAus.1, SAus.2, SAus.3 und
- eine Steuereinheit SE.
Die Waage Waa umfasst
- eine Entscheidungseinheit EE und
- mindestens eine Wiegezelle WZ.

In Fig. 1 sind Materialflüsse mit durchgezogenen Pfeilen dargestellt, Datenflüsse mit gestrichelten Pfeilen.

An die Entscheidungseinheit EE werden
- die Messwerte vom Messgerät MGer und
- die Messwerte von der Wiegezelle WZ

übermittelt. Die Entscheidungseinheit EE vermag automatisch zu entscheiden, ob eine Postsendung Ps(i) die vorgegebene erste Eigenschaft aufweist oder nicht und ob die Postsendung Ps(i) die zweite Eigenschaft hat oder nicht. Hierfür wertet die Entscheidungseinheit EE die Messwerte vom Messgerät MGer und von der Wiegezelle WZ aus. Die Entscheidungseinheit EE gibt ein gemessenes Gewicht Gew(i) einer Postsendung Ps(i) aus. Außerdem übermittelt die Entscheidungseinheit EE Entscheidungen an die Steuereinheit EE.

An die Steuereinheit SE werden
- das Auswertungsergebnis der Bildauswerteeinheit Bae und
- die Entscheidungen von der Entscheidungseinheit EE übermittelt. Die Steuereinheit SE steuert folgende Bestandteile der Sortieranlage SAnl an:
- die Waage Waa, um die Waage Waa in einen bestimmten Betriebsmodus zu versetzen, sowie
- die Ausschleus-Einrichtung Aus, um eine Postsendung in einen zuvor ausgewählten Sortierausgang SAus.1, SAus.2, SAus.3 auszuschleusen.

Die Transport-Einrichtung TE transportiert Postsendungen an der Kamera Ka vorbei und über die Wiegezelle WZ hinweg. Die Transport-Einrichtung TE lässt sich so ansteuern, dass die Transport-Einrichtung TE Postsendungen wahlweise mit einer ersten Transportgeschwindigkeit v1 oder mit einer zweiten Transportgeschwindigkeit v2 transportiert, wobei die zweite Transportgeschwindigkeit v2 geringer als die erste Transportgeschwindigkeit v1 ist.

Postsendungen aus dem Sortierausgang SAus.3 werden wieder zurück zum Vereinzeler Ver gebracht und durchlaufen erneut die Sortieranlage SAnl.

In einer Ausgestaltung erzeugt die Kamera Ka ein rechnerverfügbares Abbild Abb von der Postsendung. Die Auswertungseinheit Bae wertet dieses Abbild aus und entziffert die Zieladresse im Abbild. Die Auswerteeinheit Bae umfasst eine OCR-Einheit, die automatisch per "optical character recognition" (OCR) die Angaben zur Zieladresse im Abbild Abb zu entziffern versucht. Gelingt dies nicht, so wird in einer Ausgestaltung das Abbild Abb von der Oberfläche der Postsendung an eine Videocodierstation übermittelt und auf einen Bildschirm dieser Videocodierstation dargestellt. Ein Bearbeiter liest die Zieladresse im dargestellten Abbild Abb und gibt Angaben zur Zieladresse, z. B. die Postleitzahl, mittels eines Eingabegeräts, z. B. einer Tastatur, ein.

In einer anderen Ausgestaltung liefert der Absender die gleichartigen Postsendungen ohne Freimachungsvermerk und ohne Zieladresse ein. Außerdem übermittelt der Absender eine rechnerverfügbare Auflistung mit den Zieladressen der Postsendungen an den Transporteur. Der Transporteur ermittelt selber das jeweils erforderliche Beförderungsentgelt und versieht selber die Postsendungen mit der jeweiligen Zieladresse.

In einer weiteren Ausgestaltung liefert ein Absender viele gleichartige Postsendungen ein. Jede Postsendung ist mit einer Zieladresse versehen und weist keinen Freimachungsvermerk auf. Der Transporteur ermittelt selber das jeweilige Beförderungsentgelt für jede Postsendung und stellt dem Absender eine Rechnung über den Transport dieser Postsendungen. Auch hierfür ist jede Postsendung mit einer zertifizierten Waage zu wiegen.

In einer weiteren Ausgestaltung wurde die jeweilige Zieladresse jeder Postsendung in einem vorhergehenden Sortierlauf ermittelt und abgespeichert. In demjenigen Sortierlauf, in dem die Postsendungen zu wiegen sind, wird die abgespeicherte Zieladresse ermittelt, z. B. indem ein aufgedrucktes Strichmuster gelesen wird oder die Postsendung anhand eines Merkmalswertevektors identifiziert wird.

Für jede Postsendung wird im Ausführungsbeispiel jeweils ein Datensatz erzeugt. Dieser Datensatz umfasst eine interne Kennung, die die Postsendung eindeutig kennzeichnet, sowie eine Kennzeichnung der gelesenen oder übermittelten Zieladresse. Dieser Datensatz wird in einem zentralen Datenspeicher DSp abgespeichert. Der Datensatz wird erzeugt, sobald die Postsendung Ps(i) an der Kamera Ka vorbeitransportiert wird. Der Datensatz wird später um weitere Informationen ergänzt, z. B. um die entzifferte Zieladresse und um das gemessene Gewicht Gew(i).

Die Sortieranlage SAnl besitzt die geeichte Waage Waa und die Steuerungseinheit SE. Um die Gegenstände, hier also Postsendungen, zu wiegen, wird diese geeichte Waage Waa verwendet. Die Waage Waa wird z. B. gemäß der europäischen Messgeräte-Richtlinie 2004/22/EG ("Measuring Instruments Directive", MID) geprüft und geeicht und erfüllt die Anforderungen dieser MID. Der Teil MID-006 reguliert selbsttätige Waagen.

Die Waage Waa liefert für jede Postsendung jeweils einen Messwert, der als das Gewicht der Postsendung verwendet wird - es sei denn, das Gewicht der Postsendung liegt weder in einer ersten noch in einer zweiten Gewichtsklasse. Dieser Messwert, den die Waage Waa liefert, wird insbesondere dazu verwendet, um ein Soll-Beförderungsentgelt der Postsendung zu berechnen. Der Datensatz für diese Postsendung im zentralen Datenspeicher DSp wird um eine Kennzeichnung des gemessenen Gewichtes ergänzt.

Die Steuerungseinheit SE erhält Messwerte von den Sensoren der Waage Waa und steuert die Waage Waa und weitere Bestandteile der Sortieranlage SAnl an. Vorzugsweise sind Funktionen der Entscheidungseinheit EE und/oder der Steuerungseinheit SE in einer Steuerung der Waage selber realisiert. Um rechtliche Anforderungen zu erfüllen, wird die Entscheidung, ob ein Messwert der Waage Waa in eine vorgegebene Gewichtsklasse fällt oder nicht, im Ausführungsbeispiel von der Entscheidungseinheit EE in der Waage Waa und nicht von einer Entscheidungseinheit außerhalb der Waage durchgeführt. Die Entscheidungseinheit EE oder eine separate Waagensteuerung veranlasst auch, dass ein Messwert der Waage manipulationssicher in einem "Alibispeicher" abgespeichert wird.

Der Datensatz wird dergestalt gegen nachträgliche Veränderung gesperrt, dass sich bei Bedarf gerichtsfest nachweisen lässt, welches Gewicht die Postsendung tatsächlich hatte, d. h. welchen Messwert die gemäß MID geeichte Waage Waa geliefert hat. Um nachträgliche Veränderungen der abgespeicherten Werte der entgeltrelevanten Parameter zu vermeiden, werden die Datensätze vorzugsweise in einem so genannten "Alibispeicher" abgespeichert.

Im Ausführungsbeispiel werden weitere entgeltrelevante Parameter der Postsendung gemessen, insbesondere die drei Abmessungen Länge, Höhe und Dicke der Postsendung. Das Messgerät MGer liefert diese Abmessungen. Das Beförderungsentgelt kann auch von der Zieladresse und von Vorausverfügungen ("endorsements") des Absenders abhängen, z. B. Versendung in ein asiatisches Land per Einschreiben. Auch diese drei Abmessungen werden im Datensatz so abgespeichert, dass nachträglich Veränderungen der Abmessungen nicht möglich sind, vorzugsweise per "Alibispeicher".

Eine Berechnungseinheit berechnet das Soll-Beförderungsentgelt für die Postsendung und verwendet hierfür das Gewicht und die Werte der weiteren entgeltrelevanten Parameter. Eine Kennzeichnung des Soll-Beförderungsentgelts wird im Datensatz abgespeichert. Falls der Absender selber die Postsendungen mit einem Freimachungsvermerk versehen hat, wird eine Kennzeichnung des ermittelten Ist-Beförderungsentgelts ebenfalls im Datensatz abgespeichert.

Im Ausführungsbeispiel werden zwei Gewichtsklassen für Postsendungen unterschieden. Welche beiden Gewichtsklassen dies sind, gibt der Transporteur individuell vor. Folgende Gewichtsklassen werden unterschieden:
- eine erste Gewichtsklasse mit dem Bereich zwischen 5 g und einer ersten oberen Grenze, die zwischen 100 g und 150 g liegt und
- eine zweite Gewichtsklasse mit dem Bereich zwischen 10 g und einer zweiten oberen Grenze, die zwischen 300 g und 480 g liegt.

Die beiden Gewichtsklassen überlappen sich also. Die meisten Postsendungen der ersten Gewichtsklasse gehören auch zur zweiten Gewichtsklasse. Die erste Gewichtsklasse fungiert in einer Ausgestaltung des Ausführungsbeispiels als die erste Eigenschaft, die zweite Gewichtsklasse als die zweite Eigenschaft, die ein Gegenstand (hier: eine Postsendung) hat oder nicht hat.

Die Waage Waa lässt sich in zwei Betriebsarten betreiben, und zwar in beiden Betriebsarten konform zu MID 006. In der ersten Betriebsart vermag die Waage Waa einen Gegenstand, also z. B. eine Postsendung, der ersten Gewichtsklasse mit einer vorgegebenen ersten Toleranz von ± 1 g zu wiegen. Gewährleistet wird also, dass der Messwert, den die Waage liefert, vom tatsächlichen Gewicht um maximal 1 g abweicht, falls das tatsächliche Gewicht in die erste Gewichtsklasse fällt und die Waage Waa in der ersten Betriebsart betrieben wird. In der zweiten Betriebsart vermag die Waage Waa einen Gegenstand mit einer vorgegebenen zweiten Toleranz von ± 2 g zu wiegen, falls das tatsächliche Gewicht des Gegenstands in die zweite Gewichtsklasse fällt und die Waage Waa in der zweiten Betriebsart betrieben wird.

Die Waage Waa vermag einen Gegenstand zu wiegen, während dieser Gegenstand über die Waage Waa hinweg transportiert wird. Beispielsweise wird gemessen, wie weit die Gewichtskraft des Gegenstands einen Messfühler nach unten auslenkt. Oder gemessen wird, welche Kraft erforderlich ist, um die Gewichtskraft des Gegenstands zu kompensieren. Das eigentliche Wiegen wird von der Wiegezelle WZ durchgeführt. In der ersten Betriebsart vermag die Waage Waa die oben beschriebene erste Toleranz zu gewährleisten, wenn der Gegenstand zur ersten Gewichtsklasse gehört und mit einer ersten Transportgeschwindigkeit v1 über die Waage Waa hinweg oder auf andere Weise an der Waage vorbei transportiert wird, wobei die erste Transportgeschwindigkeit v1 kleiner oder gleich einer ersten vorgegebenen Geschwindigkeits-Schranke v1_th ist. Die Schranke v1_th liegt z. B. zwischen 3,5 m/sec und 4,0 m/sec. In der zweiten Betriebsart vermag die Waage Waa die oben beschriebene zweite Toleranz zu gewährleisten, wenn der Gegenstand mit einer zweiten Transportgeschwindigkeit v2 über die Waage Waa hinweg oder sonst wie an der Waage Waa vorbei transportiert wird, wobei die zweite Transportgeschwindigkeit v2 kleiner oder gleich einer zweiten Geschwindigkeits-Schranke v2_th ist. Die Schranke v2_th liegt z. B. zwischen 2,0 m/sec und 2,5 m/sec, wobei der Gegenstand zur zweiten Gewichtsklasse gehört.

In einer Realisierung vermag die Waage Waa jeden Gegenstand der ersten Gewichtsklasse zu wiegen, während dieser Gegenstand mit einer Transportgeschwindigkeit v1 kleiner oder gleich der Schranke v1_th über die Waage hinweg transportiert wird. In dieser Realisierung hat ein Gegenstand die erste Eigenschaft, wenn sein Gewicht in die erste Gewichtsklasse fällt. Die Waage Waa vermag den Gegenstand der zweiten Gewichtsklasse zu wiegen, während dieser Gegenstand mit einer Transportgeschwindigkeit v2 kleiner oder gleich der Schranke v2_th über die Waage hinweg transportiert wird. In dieser Realisierung hat ein Gegenstand stets die zweite Eigenschaft, wenn sein Gewicht in die zweite Gewichtsklasse fällt. Die zweite Geschwindigkeits-Schranke v2_th ist kleiner als die erste Geschwindigkeits-Schranke v1_th.

In einer zweiten Realisierung vermag die Waage Waa in der ersten Betriebsart nur dann einen Gegenstand mit der vorgegebenen ersten Toleranz zu wiegen, wenn das Gewicht des Gegenstands in die erste Gewichtsklasse fällt und zusätzlich der Wert, den ein weiterer physikalischer Parameter für diese Postsendung annimmt, in einem vorgegebenen Wertebereich liegt. Beispielsweise darf eine Abmessung (Länge, Höhe, Dicke) des Gegenstands nicht über einer vorgegebenen Schranke liegen. In diesem Fall hat ein Gegenstand die erste Eigenschaft, wenn sein Gewicht in die erste Gewichtsklasse fällt und seine Abmessungen in die vorgegebenen ersten Abmessungen-Bereiche fallen. Der Gegenstand ist dann z. B. ein Standardbrief (in den USA: "letter"). Ein Gegenstand hat die zweite Eigenschaft, wenn sein Gewicht in die zweite Gewichtsklasse fällt und seine Abmessungen in den vorgegebenen zweiten Abmessungen-Bereiche fallen. Ein Gegenstand, der die zweite Eigenschaft, aber nicht die erste Eigenschaft hat, ist z. B. ein Großbrief (in den USA: "flat").

Im Ausführungsbeispiel hat eine Postsendung die erste Eigenschaft, wenn ihr Gewicht in die erste Gewichtsklasse fällt und die Postsendung aufgrund ihrer Abmessungen zu einer ersten Formatklasse gehört. Eine Postsendung hat die zweite Eigenschaft, wenn ihr Gewicht in die zweite Gewichtsklasse fällt und die Postsendung aufgrund ihrer Abmessungen zu einer zweiten Formatklasse gehört. Die beiden Gewichtsklassen überlappen sich. Die erste Formatklasse ist eine Teilmenge der zweiten Formatklasse.

Im Folgenden wird durchgängig von "der ersten Eigenschaft" und "der zweiten Eigenschaft" gesprochen. Das Gewicht eines Gegenstands mit der ersten Eigenschaft fällt stets in die erste Gewichtsklasse. Das Gewicht eines Gegenstands mit der zweiten Eigenschaft fällt stets in die zweite Gewichtsklasse.

Die Waage Waa lässt sich durch eine Ansteuerung von außen automatisch von der ersten in die zweite Betriebsart und umgekehrt von der zweiten in die erste Betriebsart umschalten. Zum Umschalten werden von außen verschiedenen internen Parametern der Waage Waa neue Werte zugewiesen. In der Anordnung von Fig. 1 steuert die Steuereinheit SE eine Waagen-Steuerung an, welche ihrerseits die Parameter der Waage Waa entsprechend verändert.

In einer Ausgestaltung schaltet ein Anlagenbediener die Waage Waa um. Hierzu verwendet der Anlagenbediener eine Bedieneinheit der Sortieranlage SAnl mit einem Bildschirmgerät und geeigneten Eingabegeräten, z. B. berührungssensitive Flächen auf dem Bildschirm oder verschiedene Bedienknöpfe. In einer anderen Ausgestaltung überträgt die Steuerungseinheit SE entsprechende Daten oder Steuerbefehle zum Umschalten über eine Schnittstelle an die Waage Waa. Dieses manuelle oder automatische Umschalten lässt sich im Ausführungsbeispiel aber nur dann durchführen, wenn die Waage Waa gerade keine Postsendungen wiegt.

In einer Ausgestaltung vermag die Waage Waa auch dann ein Mess-Signal zu liefern, wenn die Waage Waa in der ersten Betriebsart betrieben wird und einen Gegenstand wiegt, der nicht die erste Eigenschaft besitzt. Dieses Mess-Signal lässt sich zwar nicht als das Gewicht des Gegenstands verwenden, das MID-konform gemessen wurde, lässt sich aber automatisch auswerten, um zu entscheiden, dass dieser Gegenstand hat nicht die erste Eigenschaft hat, weil sein Gewicht außerhalb der ersten Gewichtsklasse liegt.

Im Ausführungsbeispiel vermag die in der zweiten Betriebsart betriebene Waage Waa auch dann einen Messwert zu liefern, wenn der zu wiegende Gegenstand nicht die zweite Eigenschaft aufweist. Das in der zweiten Betriebsart gewonnene Messergebnis lässt sich daher für die Entscheidung verwenden, ob ein in der zweiten Betriebsart gewonnener Messwert als MID-konformes Gewicht verwendet wird oder nicht.

In einer Ausgestaltung besitzt die Waage Waa eine einzige Wiegezelle WZ. In einer anderen Ausgestaltung besitzt die Waage Waa mehrere Wiegezellen, die parallel geschaltet sind, z. B. so wie in US 6,107,579 beschrieben. Vorzugsweise sind diese Wiegezellen gleichartig ausgestaltet. Ein Strom von zu wiegenden Postsendungen wird in mehrere Teilströme aufgeteilt, nämlich einen Teilstrom pro Wiegezelle. Jeder Teilstrom wird über die zugeordnete Wiegezelle hinweg transportiert. Jede Wiegezelle liefert pro Postsendung, die über diese Wiegezelle hinweg transportiert wird, jeweils einen Messwert. Flussabwärts von den parallel geschalteten Wiegezellen werden die Teilströme wieder zu einem einzigen Strom zusammengefasst. In beiden Ausgestaltungen wird jede Postsendung während des Wiegens von der Transport-Einrichtung TE gefasst. Die Waage Waa wird zunächst in der ersten Betriebsart betrieben. Alle Postsendungen durchlaufen nacheinander die Sortieranlage SAnl. Vorzugsweise werden die flachen Postsendungen aufrecht und auf einer Kante stehend transportiert.

In einer Ausgestaltung wird jede Postsendung permanent gefasst von der Transport-Einrichtung TE transportiert. Vorzugsweise wird jede Postsendung zu jedem Zeitpunkt von jeweils zwei Endlos-Förderbändern gefasst, die um zwei senkrechte Rollen oder Achsen herumgeführt sind und sich mit gleicher Geschwindigkeit drehen. Dadurch wird die Postsendung praktisch ohne Schlupf transportiert. In einer anderen Ausgestaltung wird die Postsendung in einem Transportkanal transportiert. Hierbei steht die Postsendung auf dem Boden und lehnt an einer Seitenwand dieses Transportkanals. Der Boden des Transportkanals wird vorzugsweise von einer Abfolge von Unterflur-Förderbändern gebildet. Auch die Seitenwände können Endlos-Förderbänder umfassen.

In einer ersten Ausgestaltung wird jede Postsendung über die Waage Waa hinweg transportiert, und zwar mit einer ersten Transportgeschwindigkeit v1, welche die erste Geschwindigkeits-Schranke v1_th nicht übersteigt. v1_th liegt z. B. zwischen 3,5 m/sec und 4,0 m/sec. Die erste Transportgeschwindigkeit v1 ist vorzugsweise größer als die zweite Geschwindigkeits-Schranke v2_th, so dass die Waage in der ersten Betriebsart einen größeren Durchsatz als in der zweiten Betriebsart erzielt, weil mehr Postsendungen pro Zeiteinheit über die mindestens eine Wiegezelle WZ der Waage Waa hinweg transportiert werden.

Die Waage Waa liefert für jede Postsendung jeweils einen Messwert, der in der ersten Betriebsart gewonnen wurde. Dieser Messwert wird an die Entscheidungseinheit EE übermittelt. Diese Entscheidungseinheit EE prüft, ob der gelieferte Messwert in der ersten Gewichtsklasse liegt oder nicht.

Falls der Messwert in der ersten Gewichtsklasse liegt und der Gegenstand auch hinsichtlich seiner Abmessungen die erste Eigenschaft aufweist, so wird der Messwert als das Gewicht der Postsendung verwendet. Die Entscheidungseinheit EE gibt dieses Gewicht aus, z. B. indem die Entscheidungseinheit EE das gemessene Gewicht an die Steuerungseinheit SE übermittelt. Die Postsendung wird in einer normalen weiteren Verarbeitung verarbeitet und danach in eine von mehreren vorgegebenen Sortierendstellen SAus.1, SAus.2, ... ausgeschleust. Der Datensatz für die Postsendung im zentralen Datenspeicher DSp wird um eine Kennzeichnung dieses Messwerts ergänzt.

Falls der Messwert, den die Waage Waa nach dem Wiegen in der ersten Betriebsart liefert, hingegen außerhalb der ersten Gewichtsklasse liegt, so entscheidet die Entscheidungseinheit EE automatisch, dass das Gewicht der Postsendung nicht in der ersten Gewichtsklasse liegt, der Gegenstand daher nicht die erste Eigenschaft aufweist und daher der Messwert nicht als Gewicht der Postsendung verwendet werden kann. Die Postsendung wird in eine spezielle Sortierendstelle SAus.3 ausgeschleust. Dies gilt sowohl für Postsendungen, die die zweite Eigenschaft und nicht die erste Eigenschaft besitzen, als auch für Postsendungen, die weder die erste noch die zweite Eigenschaft besitzen.

Falls nach der ersten Verarbeitung der Postsendungen keine Postsendung in diese spezielle Sortierendstelle SAus.3 ausgeschleust wurde, so ist das Wiegen der Postsendung abgeschlossen. Denn die Waage Waa vermochte alle Postsendungen MID-konform zu wiegen. Ansonsten, also falls mindestens eine Postsendung in die spezielle Sortierendstelle SAus.3 ausgeschleust wurde,

werden folgende Schritte durchgeführt:
Die Waage Waa wird in die zweite Betriebsart umgeschaltet. Dieses Umschalten führen entweder die Entscheidungseinheit EE automatisch oder ein Anlagenbediener manuell durch.
Die Postsendungen aus der speziellen Sortierendstelle SAus.3 werden erneut dem Vereinzeler Ver zugeführt und durchlaufen erneut die Sortieranlage SAn1.
   - Hierbei werden diese Postsendungen erneut über die Waage Waa hinweg transportiert, und zwar mit einer zweiten Transportgeschwindigkeit v2, die kleiner als die erste Transportgeschwindigkeit v1 und kleiner als oder gleich der zweiten oberen Geschwindigkeits-Schranke v2_th ist.
   - Die Waage Waa wiegt jeden Gegenstand aus der speziellen Sortierendstelle SAus.3, wobei die Waage Waa in der zweiten Betriebsart betrieben wird, und liefert jeweils einen Messwert. Dieser Messwert wird an die Entscheidungseinheit EE übermittelt.
   - Die Entscheidungseinheit EE prüft, ob dieser Messwert in der zweiten Gewichtsklasse liegt.
   - Falls der Messwert, der in der zweiten Betriebsart gewonnen wurde, in der zweiten Gewichtsklasse liegt, so wird dieser Messwert als das MID-konform gemessene Gewicht der Postsendung verwendet. Die Entscheidungseinheit EE gibt den Messwert aus, z. B. an die Steuerungseinheit SE. Der Datensatz für die Postsendung wird um den in der zweiten Betriebsart gewonnenen Messwert ergänzt.
   - Die Postsendung wird in der normalen weiteren Verarbeitung verarbeitet und danach in eine von den mehreren vorgegebenen Sortierendstellen SAus.1, SAus.2 ausgeschleust.
   - Falls der Messwert nicht in der zweiten Gewichtsklasse liegt, so entscheidet die Entscheidungseinheit EE automatisch, dass das Gewicht der Postsendung nicht in der zweiten Gewichtsklasse liegt, also entweder kleiner als 10 g ist oder größer als die zweite obere Gewichts-Schranke von z. B. 350 g ist. Bei dem gerade beschriebenen Vorgehen wurde bereits zuvor entschieden, dass die Postsendung auch nicht die erste Eigenschaft aufweist. Die Waage Waa vermag daher diesen Gegenstand in keiner Betriebsart mit einer vorgegebenen Toleranz zu wiegen. Die Postsendung wird ausgeschleust und z. B. manuell oder überhaupt nicht gewogen.

In einer Abwandlung dieser ersten Ausgestaltung wird für die Entscheidung, ob eine zu wiegende Postsendung die erste Eigenschaft hat oder nicht, zusätzlich der Wert eines weiteren physikalischen Parameters verwendet. Als weiterer Parameter wird vorzugsweise eine Abmessung (Länge, Höhe, Dicke) der Postsendung verwendet. Möglich ist, mehrere Abmessungen zu verwenden. Diese Abwandlung wird insbesondere dann ausgeführt, wenn die Waage in der ersten Betriebsart nur Gegenstände mit bestimmten Abmessungen MID-konform mit der ersten Toleranz zu wiegen vermag.

Auch in dieser Abwandlung werden alle Postsendungen im ersten Durchlauf durch die Sortieranlage SAnl über die Waage Waa hinweg transportiert. Außerdem wird die mindestens eine Abmessung gemessen.

Beispielsweise misst eine Lichtschranke die Zeitdauer, in der die transportierte Postsendung die Lichtschranke unterbricht. Aus dieser gemessenen Zeitdauer und der Transportgeschwindigkeit der Postsendung wird die Länge der Postsendung - gesehen in die Transportrichtung - berechnet. Die Höhe der Postsendung wird vorzugsweise von mehreren übereinander liegende Lichtschranken gemessen.

Die Dicke der Postsendung wird z. B. gemessen, indem ein Abbild erzeugt und ausgewertet wird, welches die Postsendung von vorne zeigt. Vorzugsweise wird die aufrecht stehende Postsendung hingegen zwischen zwei Abstandssensoren hindurch transportiert. Jeder Abstandssensor misst den Abstand zwischen sich und der ihm zugewandten Oberfläche der jeweiligen Postsendung. Die Differenz aus dem bekannten und konstant bleibenden Abstand der beiden Abstandssensoren und den beiden gemessenen Abständen liefert die Dicke der Postsendung.

Die Höhe und die Länge lassen sich stattdessen durch Auswertung eines Abbilds messen, wobei dieses Abbild die aufrecht stehende Postsendung von der Seite zeigt, also in eine Betrachtungsrichtung senkrecht zur Gegenstandsebene der Postsendung.

Das Messgerät MGer für die mindestens eine Abmessung ist flussaufwärts oder flussaufwärts von der Waage angebracht. Sowohl der jeweilige Messwert von der Waage Waa als auch die Abmessung werden an die Entscheidungseinheit EE übermittelt.

Vorgegeben wird ein erster Teilbereich Dim-Tb.1 des jeweiligen Wertebereichs jeder für die Entscheidung verwendeten Abmessung. In vorab durchgeführten statistischen Untersuchungen wurde dieser Teilbereich Dim-Tb.1 so ermittelt, dass das Gewicht einer Postsendung in der Regel dann in die erste Gewichtsklasse fällt, wenn die Abmessung dieser Postsendung in dem Teilbereich Dim-Tb.1 liegt. Oder der Teilbereich wird durch die Realisierung der Waage Waa vorgegeben. Entsprechend wird ein zweiter Teilbereich Dim-Tb.2 vorgegeben.

Dann, wenn jede zur Entscheidung herangezogene Abmessung einer zu wiegenden Postsendung in dem jeweiligen Teilbereich Dim-Tb.1 liegt, entscheidet die Entscheidungseinheit EE, dass die Waage Waa auf jeden Fall diese Postsendung in der ersten Betriebsart wiegt und der in der ersten Betriebsart gewonnene Messwert ausgewertet wird. Liegt dieser Messwert dann in der ersten Gewichtsklasse, so hat die Postsendung die erste Eigenschaft, und der Messwert wird als MID-konform gemessenes Gewicht verwendet. Falls eine Abmessung hingegen außerhalb des jeweiligen Teilbereichs Dim-Tb.1 liegt, so entscheidet die Entscheidungseinheit EE, dass diese Postsendung in die spezielle Sortierendstelle SAus.3 auszuschleusen ist und in der zweiten Betriebsart zu wiegen ist. In einer Ausgestaltung wird diese Postsendung zwar zuvor von der Waage Waa in der ersten Betriebsart gewogen, der Messwert wird aber nicht als das MID-konform gemessene Gewicht der Postsendung verwendet.

Nach dieser Entscheidung werden die oben beschriebenen Schritte durchgeführt. Um zu entscheiden, ob eine Postsendung aus der speziellen Sortierendstelle SAus.3 die zweite Eigenschaft aufweist oder nicht, werden die in der zweiten Betriebsart gewonnenen Messwerte von der Waage und in einer Ausgestaltung zusätzlich mindestens eine Abmessung der Postsendung verwendet. In dieser Ausgestaltung wird geprüft, ob die Abmessung im zweiten Teilbereich Dim-Tb.2 liegt.

Vorzugsweise wiegt die in der zweiten Betriebsart betriebene Waage jede Postsendung aus der speziellen Sortierendstelle SAus.3, ohne dass zuvor unterschieden wird, ob die Postsendung die zweite Eigenschaft besitzt oder nicht. Erst nach dem Wiegen wird entschieden, ob der Messwert als MID-konform gemessenes Gewicht verwendet werden kann oder nicht.

Fig. 2 zeigt ein Flussdiagramm für die erste Ausgestaltung, bei der jede Postsendung über die in der ersten Betriebsart betriebene Waage Waa hinweg transportiert wird.

Fig. 3 zeigt ein Flussdiagramm für den Schritt aus Fig. 2, einen Gegenstand in der zweiten Betriebsart zu wiegen.

N Postsendungen Ps(1), Ps(2), ..., Ps(N) sind zu wiegen. Bei dem Verfahren, das Fig. 2 und Fig. 3 zeigen, werden für jede Postsendung Ps(i) (i=1, ..., N) folgende Schritte durchgeführt:

| | |
|---|---|
| S1 | Die Postsendung Ps(i) wird der Sortieranlage SAnl zugeführt und mit der ersten Transportgeschwindigkeit über die Waage hinweg transportiert. |
| S2 | Die Waage Waa wiegt die Postsendung Ps(i) in der ersten Betriebsart. |
| S3 | Die Abmessungen der Postsendung Ps(i) werden gemessen. Dies liefert die Abmessungen Dim(i). |
| S4 | Geprüft wird, ob die Postsendung Ps die erste Eigenschaft besitzt oder nicht. |
| Ent.1 | Entscheidung: hat die Postsendung Ps(i) die erste Eigenschaft? |
| S11 | Als MID-konform gemessenes Gewicht Gew(i) der Postsendung Ps(i) wird das in der ersten Betriebsart gemessene Gewicht Gew.1(i) verwendet. |
| S5 | Die Postsendung Ps(i) wird in der zweiten Betriebsart gewogen. Die hierbei durchgeführten Schritte zeigt Fig. 3. |
| S6 | Die Postsendung Ps(i) wird in die spezielle Sortierendstelle Saus.3 ausgeschleust und erneut der Sortieranlage SAn1 zugeführt. |
| S7 | Die Postsendung Ps(i) wird mit der zweiten Transportgeschwindigkeit v2 über die Waage Waa hinweg transportiert. |
| S8 | Die Waage Waa wiegt die Postsendung Ps(i) in der zweiten Betriebsart. |
| S9 | Geprüft wird, ob die Postsendung Ps(i) die zweite Eigenschaft besitzt oder nicht. |
| Ent.2 | Entscheidung: hat die Postsendung Ps(i) die zweite Eigenschaft? |
| S12 | Das in der zweiten Betriebsart gemessene Gewicht Gew.2(i) wird als das MID-konform gemessene Gewicht Gew(i) der Postsendung Ps(i) verwendet. |
| Erg.1 | Ergebnis: Die Waage Waa vermag die Postsendung Ps(i) nicht MID-konform zu wiegen |

Die Waage Waa wiegt also dann eine Postsendung in der ersten Betriebsart, wenn die Entscheidungseinheit EE aufgrund der Abmessung entschieden hat, dass die Abmessungen der Postsendung nicht ausschließen, dass diese Postsendung die erste Eigenschaft hat. Falls der Messwert von der Waage Waa aber nicht in die erste Gewichtsklasse fällt, so wird die Postsendung in die spezielle Sortierendstelle SAus.3 ausgeschleust und später von der in der zweiten Betriebsart betriebenen Waage gewogen, denn diese Postsendung hat aufgrund ihres Gewichts nicht die erste Eigenschaft.

Umgekehrt kann der Fall auftreten, dass die Entscheidungseinheit EE aufgrund der Abmessung bereits vor dem Wiegen entschieden hat, dass eine Postsendung nicht in die erste Formatklasse oder wahrscheinlich nicht in die erste Gewichtsklasse fällt. Die Entscheidung über die Zugehörigkeit zur ersten Formatklasse lässt sich exakt treffen, nachdem die Abmessungen gemessen wurden. Die Entscheidung über die Zugehörigkeit zur ersten Gewichtsklasse ist vor dem Wiegen nur aufgrund des experimentell gewonnen Zusammenhangs zwischen Gewicht und Abmessungen und daher nur mit Wahrscheinlichkeit möglich.

Nach dem Wiegen stellt sich heraus, dass das Gewicht der Postsendung doch in die erste Gewichtsklasse fällt und die Postsendung sowohl hinsichtlich ihres Gewichts als auch hinsichtlich ihrer Abmessungen die erste Eigenschaft besitzt. In diesem Fall wird die Postsendung von der in der zweiten Betriebsart betriebenen Waage Waa gewogen, obwohl auch die in der ersten Betriebsart betriebene Waage Waa das Gewicht dieser Postsendung MID-konform zu messen vermag. Weil der Gewichtsbereich der zweiten Gewichtsklasse dem Gewichtsbereich der ersten Gewichtsklasse fast vollständig umfasst, liefert diese Ausgestaltung dennoch in der Regel ein MID-konform gewonnenes Gewicht.

In einer anderen Abwandlung der ersten Ausgestaltung wird vermieden, dass die Waage Waa in der ersten Betriebsart einen Gegenstand wiegt, der nicht die erste Eigenschaft besitzt, weil er zu schwer ist, weswegen die Waage Waa diesen Gegenstand nicht MID-konform zu wiegen vermag.

Fig. 4 zeigt ein Flussdiagramm für eine Abwandlung, bei der die Waage Waa in der ersten Betriebsart nur Gegenstände mit der ersten Eigenschaft wiegt.

Gleiche Bezugszeichen haben die gleiche Bedeutung wie die Bezugszeichen in Fig. 2 und Fig. 3. Zusätzlich werden beim Verfahren gemäß Fig. 4 folgende Schritte durchgeführt:

| | |
|---|---|
| S10 | Geprüft oder vorhergesagt wird, ob die Postsendung Ps(i) die erste Eigenschaft besitzt oder nicht. Für diese Prüfung bzw. Vorhersage werden nur die Abmessungen Dim(i) der Postsendung Ps(i) verwendet, nicht aber deren Gewicht. |
| S19 | Die Postsendung Ps(i) wird an der in der ersten Betriebsart betriebenen Waage Waa vorbei geleitet. Oder die Waage Waa wird ausgeschaltet und arretiert, während die Postsendung Ps(i) über die Waage Waa hinweg transportiert wird. |
| Ent.1a | Entscheidung: Wird die Postsendung Ps(i) in der ersten Betriebsart gewogen oder nicht? Diese Entscheidung wird abhängig von der Prüfung oder Vorhersage S10 getroffen, ohne das Gewicht der Postsendung Ps(i) bereits zu kennen. |

In dieser Abwandlung ist Das Messgerät MGer für den mindestens einen weiteren physikalischen Parameter flussaufwärts von der Waage Waa angeordnet.

Jede Postsendung wird zunächst an der Parameter-Messeinheit vorbei und anschließend über die Waage Waa hinweg transportiert. Jeder Wert eines weiteren Parameters, also z. B. jede gemessene Abmessung, wird an die Steuerungseinheit übermittelt. Die Entscheidungseinheit EE entscheidet durch Auswertung dieser Parameterwerte, ob der Gegenstand die erste Eigenschaft hat oder nicht, und sagt näherungsweise aufgrund der Abmessungen vorher, ob das Gewicht der Postsendung in der ersten Gewichtsklasse liegt oder nicht, ohne für diese Vorhersage und Entscheidung einen Messwert von der Waage zu verwenden.

In dieser anderen Abwandlung vermag die Steuerungseinheit SE die Waage Waa einzuschalten und auszuschalten. Vorzugsweise wird die Waage Waa beim Ausschalten arretiert und lässt sich nicht von einem zu wiegenden Gegenstand in lang andauernde Eigenschwingungen versetzen. Alle Postsendungen werden nacheinander über die Waage Waa hinweg transportiert, wobei die Waage in der ersten Betriebsart betrieben wird. Falls die Entscheidungseinheit EE aufgrund der zuvor gemessenen Abmessungen einer Postsendung und ohne das Gewicht dieser Postsendung zu kennen entscheidet, dass diese Postsendung die erste Eigenschaft besitzt, so stellt die Steuerungseinheit SE sicher, dass die Waage eingeschaltet ist, bevor die Postsendung die Waage Waa erreicht. Bei Bedarf schaltet die Steuerungseinheit SE die Waage ein und dearretiert sie. Die Waage Waa wiegt die Postsendung, und der Messwert von der Waage wird wenigstens dann als Gewicht der Postsendung verwendet, wenn der Messwert ebenfalls in der ersten Gewichtsklasse liegt. Die Postsendung besitzt sowohl hinsichtlich ihrer Abmessungen als auch hinsichtlich ihres Gewichts die erste Eigenschaft.

Falls der Messwert außerhalb der ersten Gewichtsklasse liegt, so wird die Postsendung in die spezielle Sortierendstelle SAus.3 ausgeschleust.

Falls die Entscheidungseinheit EE hingegen bereits aufgrund der Abmessungen vorhersagt, dass das Gewicht einer Postsendung voraussichtlich außerhalb der ersten Gewichtsklasse liegen wird, oder aufgrund der Abmessung entscheidet, dass die Postsendung nicht die erste Eigenschaft hat, so stellt die Steuerungseinheit SE sicher, dass die Waage Waa ausgeschaltet ist. Bei Bedarf schaltet die Steuerungseinheit SE die Waage Waa aus und bewirkt, dass die Postsendung die Waage Waa erst dann erreicht, wenn die Waage Waa ausgeschaltet und arretiert ist. Die Postsendung wird in die spezielle Sortierendstelle SAus.3 ausgeschleust, ohne dass die Waage Waa diese schwere Possendung in der ersten Betriebsart gewogen hat.

Die Postsendungen aus der speziellen Sortierendstelle SAus.3 durchlaufen erneut die Sortieranlage SAn1. Die Waage Waa wird zuvor in die zweite Betriebsart umgeschaltet. Die Postsendungen aus der speziellen Sortierendstelle SAus.3 werden mit der langsameren zweiten Transportgeschwindigkeit v2 über die Waage Waa hinweg transportiert. Durch Auswertung der Werte der weiteren Parameter entscheidet die Entscheidungseinheit EE in einer Ausführungsform, ob die Postsendung die zweite Eigenschaft hat oder nicht. Die Steuerungseinheit SE schaltet die Waage aus, um zu vermeiden, dass die Waage Waa in der zweiten Betriebsart eine Postsendung wiegt, die nicht die zweite Eigenschaft hat.

In einer bevorzugten Ausführungsform wiegt die Waage Waa hingegen in der zweiten Betriebsart alle Postsendungen, die aus der speziellen Sortierendstelle SAus.3 stammen. Die Entscheidung, ob eine dieser Postsendungen die zweite Eigenschaft hat oder nicht, trifft die Entscheidungseinheit EE dann durch Auswertung des in der zweiten Betriebsart gewonnenen Messwerts von der Wiegezelle WZ und bei Bedarf zusätzlich den Abmessungen. Die in der zweiten Betriebsart betriebene Waage Waa wiegt die Postsendung also, aber nur bei positiver Entscheidung der Entscheidungseinheit EE wird der Messwert von der Wiegezelle WZ als MID-konform gewonnenes Gewicht verwendet.

In allen Variationen dieser ersten Ausgestaltung durchlaufen alle Postsendungen im ersten Durchlauf die Sortieranlage SAn1, ohne zuvor nach Abmessung oder Gewicht in zwei Mengen aufgeteilt worden zu sein. Alle diese Variationen kommen ohne eine Weiche und ohne einen "Bypass" um die Waage Waa herum aus.

In einer zweiten Ausgestaltung besitzt die Sortieranlage SAn1 zusätzlich eine Weiche, die flussaufwärts von der Waage Waa angeordnet ist. Von dieser Weiche zweigen ein Wiege-Transportpfad und ein Umgehungs-Transportpfad ("Bypass") ab. Der Wiege-Transportpfad führt über die Waage Waa hinweg, der Umgehungs-Transportpfad um die Waage Waa herum. In einer Ausgestaltung führt der Wiege-Transportpfad zu einer Verzweigungsstelle, von wo weitere Transportpfade zu den parallel geschalteten Wiegezellen führen. Die Waage Waa vermag einen Gegenstand dann zu wiegen, wenn der Gegenstand aus dem Wiege-Transportpfad über die Waage bzw. die Wiegezellen hinweg transportiert wird.

In einer Ausführungsform ist das Messgerät MGer für den weiteren physikalischen Parameter flussaufwärts von der Weiche angeordnet. Dieses Messgerät MGer misst zum Beispiel eine Abmessung einer zu sortierenden Postsendung. Diese Parameterwerte werden an die Entscheidungseinheit EE übermittelt. Die Entscheidungseinheit EE sagt durch Auswertung der Abmessungen vorher, ob das Gewicht einer Postsendung in die erste Gewichtsklasse fallen wird oder nicht, abhängig von dieser Vorhersage trifft die Entscheidungseinheit EE eine Entscheidung, ob die Waage diese Postsendung in der ersten Betriebsart wiegt, weil die Postsendung voraussichtlich die erste Eigenschaft hat, oder nicht. Die Entscheidungseinheit EE übermittelt ihre Entscheidungen automatisch an die Steuerungseinheit SE. Die Steuerungseinheit SE steuert die Waage abhängig von dieser Entscheidung an. Die Weiche lenkt eine Postsendung, deren Gewicht in die erste Gewichtsklasse fällt, in dem Wiege-Transportpfad. Eine andere Postsendung wird von der Weiche auf den Umgehungs-Transportpfad gelenkt.

Die Waage Waa befindet sich in der ersten Betriebsart und wiegt alle Gegenstände, die gemäß der Vorhersage der Entscheidungseinheit EE die erste Eigenschaft aufweisen und daher, genauer gesagt: alle Gegenstände, die auf dem Wiege-Transportpfad über die Waage hinweg transportiert werden. Der Umgehungs-Transportpfad transportiert die übrigen Postsendungen zu der speziellen SAus.3 Sortierendstelle. Diese Postsendungen durchlaufen später erneut die Sortieranlage SAnl und werden von der Waage Waa gewogen, wobei die Waage Waa in der zweiten Betriebsart betrieben wird.

In einer anderen Ausführungsform umfasst die Sortieranlage SAn1 eine so genannte Format-Trenneinrichtung, die z. B. als rotierende Trommel mit Schlitzen ausgestaltet ist. Die Postsendungen werden in die rotierende Trommel transportiert. Eine Postsendung fällt dann durch einen Schlitz der rotierenden Trommel, wenn jede Abmessung der Postsendung unter einem jeweiligen Grenzwert liegt. Eine Postsendung, die durch den Schlitz fällt, wird auf dem Wiege-Transportpfad zur Waage transportiert. Eine Postsendung, die in der Trommel verbleibt, wird später aus der Trommel entnommen und wird auf den Umgehungs-Transportpfad transportiert. Dieser Umgehungs-Transportpfad transportiert die Postsendung in die spezielle Sortierendstelle. Eine derartige Format-Trenneinrichtung wird z. B. in DE 10038690 C1 beschrieben.

Alle bislang beschriebenen Ausführungsformen stellen sicher, dass jede Postsendung auf eine Weise gewogen wird, die MID-konform ist. Das gemessene Gewicht lässt sich bei Bedarf gerichtsfest verwenden, falls es zu Disputen zwischen dem Transporteur und dem Absender über die Höhe des erforderlichen Beförderungsentgelts kommen sollte. Dies gilt nur dann nicht, wenn das Gewicht der Postsendung weder in die erste noch in die zweite Gewichtsklasse fällt.

Eine Abwandlung spart Zeit ein, weil bei dieser Abwandlung in der Regel weniger Postsendungen die Sortieranlage SAn1 erneut durchlaufen müssen. Diese Abwandlung wird insbesondere für bereits frankierte Postsendungen eingesetzt. Vorgegeben ist eine rechnerverfügbare Beschreibung einer Tarifstruktur des Transporteurs. Diese Tarifstruktur definiert die entgeltrelevanten Parameter und ordnet verschiedenen Kombinationen von Wertebereichen dieser Parameter jeweils ein Soll-Beförderungsentgelt zu. Beispielsweise legt die Tarifstruktur fest, dass ein Brief, dessen Abmessungen innerhalb bestimmter Grenzen liegen und dessen Gewicht zwischen 20 g und 50 g liegt, mit x Euro-Cent zu frankieren ist.

Vorgegeben wird mindestens ein entgeltrelevanter physikalischer Parameter, der sich schneller als das Gewicht messen lässt, z. B. eine Abmessung. Durch eine vorhergehende statistische Untersuchung wird ein Zusammenhang zwischen diesem mindestens einen Parameter und dem Gewicht experimentell ermittelt. Der funktionale Zusammenhang wird näherungsweise abgespeichert.

Zunächst durchlaufen alle zu wiegenden Postsendungen so wie oben beschrieben die Sortieranlage SAn1. Die Waage Waa wird in der ersten Betriebsart betrieben. Im ersten Sortierlauf werden vorzugsweise folgende Schritte für jede Postsendung durchgeführt:
- Die Zieladresse der Postsendung wird ermittelt.
- Das Ist-Beförderungsentgelt, mit dem die Postsendung versehen ist, wird ermittelt.
- Der mindestens eine schneller messbare entgeltrelevante Parameter wird gemessen, bevorzugt eine Abmessung der Postsendung. Beispielsweise wird entschieden, zu welcher Formatklasse die Postsendung gehört.

Die Entscheidungseinheit EE oder eine spezielle Auswerteeinheit entscheiden, ob die Postsendung einer Unterfrankierung verdächtig ist oder nicht. Nur bei einer verdächtigen Postsendung wird das Gewicht MID-konform gemessen. Daher wird nur bei einer verdächtigen Postsendung, die nicht die erste Eigenschaft besitzt, ein Wiegen in der zweiten Betriebsart und damit ein erneuter Durchlauf durch die Sortieranlage SAn1 durchgeführt. Für die Entscheidung, ob eine Postsendung verdächtig ist oder nicht, werden die ermittelte Zieladresse, das Ist-Beförderungsentgelt, der mindestens eine rasch messbare Parameterwert und der funktionale Zusammenhang ausgewertet. Beispielsweise wird entschieden, dass bei einem Ist-Beförderungsentgelt von p und einem Format von x * y * z die Postsendung unverdächtig ist.

Für eine verdächtige Postsendung liefert die Waage Waa so wie oben beschrieben einen Messwert, und zwar entweder in der ersten Betriebsart oder in der zweiten Betriebsart.

Von einer unverdächtigen Postsendung wird kein MID-konform gemessenes Gewicht benötigt. Daher wird eine solche Postsendung auf jeden Fall normal weiterverarbeitet und nicht in die spezielle Sortierendstelle SAus.3 ausgeschleust und daher auch nicht in der zweiten Betriebsart gewogen. Entweder wird die unverdächtige Postsendung überhaupt nicht gewogen, oder das gemessene Gewicht der Postsendung wird nur zum weiteren Transportieren der Postsendung verwendet, aber nicht dafür, das Ist-Beförderungsentgelt zu überprüfen. Um zu erreichen, dass eine unverdächtige Postsendung nicht gewogen wird, wird diese Postsendung auf einem Umgehungs-Transportpfad ("Bypass") an der Waage Waa vorbei transportiert, oder die Waage Waa wird abgeschaltet, während die Postsendung über die Waage hinweg transportiert wird.

Fig. 5 zeigt ein Flussdiagramm für eine Abwandlung, bei der nur solche Postsendungen MID-konform gewogen werden, die der Unterfrankierung verdächtig sind.

Bei dem Verfahren, das durch Fig. 5 veranschaulicht wird, werden zusätzlich folgende Schritte durchgeführt:

| | |
|---|---|
| S20 | Ermittlung des Ist-Beförderungsentgelts Pay(i), mit dem die Postsendung Ps(i) versehen ist. |
| S21 | Prüfung, ob die Postsendung Ps(i) als der Unterfrankierung verdächtig eingestuft wird und daher MID-konform zu wiegen ist. |
| Ent.3 | Entscheidung: Ist die Postsendung Ps(i) MID-konform zu wiegen? |
| Erg.2 | Ergebnis: ein MID-konform gemessenes Gewicht der Postsendung Ps(i) wird nicht benötigt. |

Die Entscheidung, ob eine Postsendung als verdächtig eingestuft wird und daher MID-konform zu wiegen ist, wird ebenfalls von der Entscheidungseinheit EE getroffen und hängt von Schwellwerten in den Wertebereichen des entgeltrelevanten Parameters und des Beförderungsentgelts ab. Diese Schwellwerte lassen sich justieren, um einen gewünschten Kompromiss zwischen folgenden beiden Anforderungen zu finden:
- Ein möglichst hoher Anteil unfrankierter Postsendungen soll MID-konform gewogen werden.
- Ein möglichst hoher Anteil korrekt frankierter Postsendungen soll schnell verarbeitet werden.

### Bezugszeichenliste

| *Bezugszeichen* | *Bedeutung* |
|---|---|
| Abb | rechnerverfügbares Abbild einer Postsendung |
| Aus | Ausschleus-Einrichtung der Sortieranlage SAn1 |
| Bae | Bildauswerteeinheit der Sortieranlage SAn1 |
| Dim (i) | Abmessungen der Postsendung Ps(i) |
| Dim-Tb.1 | vorgegebener Teilbereich der Abmessungen einer Postsendung. Nur dann, wenn alle Abmessungen in den Teilbereich Dim_Tb.1 fallen, hat die Postsendung die erste Eigenschaft |
| Dim-Tb.2 | vorgegebener Teilbereich der Abmessungen einer Postsendung. Nur dann, wenn alle Abmessungen in den Teilbereich Dim_Tb.2 fallen, hat die Postsendung die zweite Eigenschaft |
| DSp | zentraler Datenspeicher mit Datensätzen für Postsendungen |
| EE | Entscheidungseinheit, entscheidet, ob eine Postsendung die erste Eigenschaft hat oder die zweite Eigenschaft hat |
| Erg.1 | Ergebnis: Die Waage vermag die Postsendung Ps(i) nicht MID-konform zu wiegen |
| Erg.2 | Ergebnis: ein MID-konform gemessenes Gewicht der Postsendung Ps(i) wird nicht benötigt |
| Ent.1 | Entscheidung: hat die Postsendung Ps(i) die erste Eigenschaft? |
| Ent.1a | Entscheidung: wird die Postsendung Ps(i) in der ersten Betriebsart gewogen oder nicht? |
| Ent.2 | Entscheidung: hat die Postsendung Ps(i) die zweite Eigenschaft? |
| Ent.3 | Entscheidung: Ist die Postsendung Ps(i) MID-konform zu wiegen? |
| Gew.1 (i) | in der ersten Betriebsart gemessenes Gewicht der Postsendung Ps(i) |
| Gew.2 (i) | in der zweiten Betriebsart gemessenes Gewicht von Ps(i) |
| Gew (i) | MID-konform gemessenes Gewicht von Ps(i) |
| Ka | Kamera der Sortieranlage SAn1 |
| MGer | Messgerät der Sortieranlage SAn1, ermittelt die Abmessungen einer Postsendung |
| N | Anzahl der zu wiegenden Postsendungen |
| Pay (i) | ermitteltes Ist-Beförderungsentgelt, mit dem die Postsendung Ps(i) versehen ist. |
| Ps (i) | zu wiegende Postsendung (i = 1, ..., N) |
| S1 | die Postsendung Ps(i) wird der Sortieranlage zugeführt und mit der ersten Transportge-schwindigkeit über die Waage hinweg transportiert |
| S2 | die Waage wiegt die Postsendung Ps(i) in der ersten Betriebsart |
| S3 | die Abmessungen der Postsendung Ps(i) werden gemessen |
| S4 | Prüfung, ob die Postsendung Ps(i) die erste Eigenschaft besitzt oder nicht |
| S5 | das Gewicht der Postsendung Ps(i) wird in der zweiten Betriebsart gewogen |
| S6 | die Postsendung Ps(i) wird in die spezielle Sortierendstelle ausgeschleust und erneut der Sortieranlage SAn1 zugeführt |
| S7 | die Postsendung Ps(i) wird mit der zweiten Transportgeschwindigkeit über die Waage hinweg transportiert |
| S8 | die Waage wiegt die Postsendung Ps(i) in der zweiten Betriebsart |
| S9 | Prüfung, ob die Postsendung Ps(i) die zweite Eigenschaft besitzt oder nicht |
| S10 | Prüfung und/oder Vorhersage aufgrund der Abmessungen Dim(i), ob die Postsendung Ps(i) die erste Eigenschaft besitzt oder nicht |
| S11 | das in der ersten Betriebsart gemessene Gewicht Gew.1(i) wird als das MID-konform gemes-sene Gewicht Gew(i) von der Postsendung Ps(i) verwendet |
| S12 | das in der zweiten Betriebsart gemessene Gewicht Gew.2(i) wird als das MID-konform gemes-sene Gewicht Gew(i) der Postsendung Ps(i) verwendet |
| S19 | Die Postsendung Ps(i) wird an der in der ersten Betriebsart betriebenen Waage vorbei geleitet. Oder die Waage wird ausgeschaltet und arretiert, während die Postsendung Ps(i) über die Waage hinweg transportiert wird. |
| S20 | Ermittlung des Ist-Beförderungsentgelts Pay(i), mit dem die Postsendung Ps(i) versehen ist |
| S21 | Prüfung, ob die Postsendung Ps(i) als der Unterfrankierung verdächtig eingestuft wird. |
| SAn1 | Sortieranlage |
| SAus.1, SAus.2, ... | Sortierausgänge der Sortieranlage SAn1 |
| SAus.3 | spezieller Sortierausgang für Postsendungen, die nicht die erste Eigenschaft besitzen |
| SE | Steuerungseinheit der Sortieranlage SAn1, erhält Messwerte von der Bildauswerteeinheit Bae, vom Messgerät MGer und von der Waage Waa und steuert die Waage Waa und die Ausschleus-Einrichtung Aus an |
| v1 | erste Transportgeschwindigkeit |
| v1 th | erste Geschwindigkeits-Schranke |
| v2 | zweite Transportgeschwindigkeit |
| v2 th | zweite Geschwindigkeits-Schranke |
| Ver | Vereinzeler ("singulator") der Sortieranlage SAn1 |
| Waa | Waage der Sortieranlage SAn1, umfasst mindestens eine Wiegezelle WZ und eine Entscheidungseinheit EE |
| WZ | Wiegezelle der Waage WAA |

## Patentansprüche

1. Verfahren zum Wiegen mindestens eines Gegenstands (Ps(1), Ps(2), ...),
wobei eine Waage (Waa) verwendet wird,
die Waage (Waa) in einer ersten Betriebsart und in einer zweiten Betriebsart betreibbar ist,
die Waage (Waa)
- beim Betrieb in der ersten Betriebsart jeden Gegenstand, der eine erste vorgegebene physikalische Eigenschaft aufweist, mit einer vorgegebenen ersten Toleranz zu wiegen vermag und
- beim Betrieb in der zweiten Betriebsart jeden Gegenstand, der eine zweite vorgegebene physikalische Eigenschaft aufweist, mit einer vorgegebenen zweiten Toleranz zu wiegen vermag,
wobei für jeden zu wiegenden Gegenstand (Ps(1), Ps(2), ...) mindestens einer der beiden Schritte durchgeführt wird, dass
- automatisch geprüft wird, ob der Gegenstand die erste Eigenschaft besitzt oder nicht (Schritt S4), oder
- die in der ersten Betriebsart betriebene Waage (Waa) den Gegenstand wiegt (Schritt S2),
wobei das Wiegen in der ersten Betriebsart für einen zu wiegenden Gegenstand (Ps(1), Ps(2), ...) immer dann durchgeführt wird, wenn
- entschieden oder vor dem Wiegen in der ersten Betriebsart vorhergesagt wurde, dass der Gegenstand die erste Eigenschaft besitzt, oder
- der Schritt zu prüfen, ob der Gegenstand die erste Eigenschaft besitzt oder nicht (Schritt S4), vor dem Wiegen in der ersten Betriebsart Schritt S2 nicht durchgeführt wurde und
dann, wenn für mindestens einen zu wiegenden Gegenstand (Ps(1), Ps(2), ...)
- der Schritt, dass die Waage in der ersten Betriebsart den Gegenstand (Schritt S2) wiegt, nicht durchgeführt wurde oder
- nach dem Wiegen des Gegenstands in der ersten Betriebsart (Schritt S2) entschieden wurde, dass der Gegenstand die erste Eigenschaft nicht besitzt,
die Waage (Waa) in die zweite Betriebsart umgeschaltet wird,
für jeden zu wiegenden Gegenstand (Ps(1), Ps(2), ...), der nicht in der ersten Betriebsart gewogen wurde oder
die erste Eigenschaft nicht besitzt,
der Schritt durchgeführt wird, dass die in der zweiten Betriebsart betriebene Waage (Waa) den Gegenstand wiegt, und für jeden zu wiegenden Gegenstand (Ps(1), Ps(2), ...) als dessen Gewicht (Gew(1), Gew(2), ...)
- dann der in der ersten Betriebsart gemessene Messwert (Gew.1(1), Gew.1(2), ...) verwendet wird, wenn entscheiden wurde, dass der Gegenstand die erste Eigenschaft besitzt, und
- dann der in der zweiten Betriebsart gemessene Messwert (Gew.2(1), Gew.2(2), ...) verwendet wird, wenn entschieden wurde, dass der Gegenstand die zweite Eigenschaft besitzt.

2. Verfahren nach Anspruch 1,
**dadurch gekennzeichnet, dass**
für jeden Gegenstand (Ps1), Ps(2), ...), den die Waage (Waa) in der ersten Betriebsart gewogen hat,
- eine Entscheidung (Ent.1) durchgeführt wird, ob dieser Gegenstand die erste Eigenschaft aufweist oder nicht, und
- für diese Entscheidung (Ent.1) der in der ersten Betriebsart gewonnene Messwert (Gew(1), Gew(2), ...) verwendet wird.

3. Verfahren nach Anspruch 2,
**dadurch gekennzeichnet, dass**
die in der ersten Betriebsart betriebene Waage (Waa) jeden zu wiegenden Gegenstand wiegt und
für jeden zu wiegenden Gegenstand die Entscheidung (Ent.1), ob der Gegenstand die erste Eigenschaft besitzt oder nicht, unter Verwendung des Messergebnisses von der Waage durchgeführt wird.

4. Verfahren nach einem der Ansprüche 1 bis 3,
**dadurch gekennzeichnet, dass**
ein weiterer physikalischer Parameter und ein Teilbereich (Dim-Tb.1) des Wertebereichs dieses Parameters vorgegeben werden,
wobei dieser Parameter für jeden zu wiegenden Gegenstand (Ps(1), Ps(2), ... ) jeweils einen Wert (Dim(1), Dim(2), ...) annimmt,
jede Prüfung, ob ein zu wiegender Gegenstand (Ps(1), Ps(2), ...) die erste Eigenschaft aufweist,
die Parameterwert-Prüfung umfasst, ob der Wert, den der Parameter (Dim(1), Dim(2), ...) für diesen Gegenstand (Ps(1), Ps(2), ...) annimmt, in den Teilbereich (Dim-Tb.1) fällt oder nicht.

5. Verfahren nach Anspruch 4,
**dadurch gekennzeichnet, dass**
für jeden zu wiegenden Gegenstand (Ps(1), Ps(2), ...)
- die Prüfung, ob der Gegenstand die erste Eigenschaft besitzt oder nicht, durchgeführt wird und
- hierbei die Parameterwert-Prüfung durchgeführt werden.

6. Verfahren nach Anspruch 5,
**dadurch gekennzeichnet, dass**
die in der ersten Betriebsart betriebene Waage (Waa) den Gegenstand dann und nur dann wiegt,
wenn der Parameterwert für diesen Gegenstand in den Teilbereich (Dim-Tb.1) fällt.

7. Verfahren nach einem der Ansprüche 1 bis 6,
**dadurch gekennzeichnet, dass**
der oder jeder Schritt, dass die Waage (Waa) einen zu wiegenden Gegentand (Ps(1), Ps(2), ...) wiegt,
den Schritt umfasst, dass der Gegenstand über die Waage (Waa) hinweg oder auf andere Weise entlang der Waage (Waa) transportiert wird, ohne den Gegenstand abzustoppen.

8. Verfahren nach Anspruch 7,
**dadurch gekennzeichnet, dass**
immer dann, wenn ein zu wiegender Gegenstand (Ps(1), Ps(2), ...) entlang der in der ersten Betriebsart betriebenen Waage (Waa) transportiert wird,
dieser Gegenstand mit einer ersten Transportgeschwindigkeit (v1) transportiert wird und
immer dann, wenn ein zu wiegender Gegenstand entlang der in der zweiten Betriebsart betriebenen Waage (Waa) transportiert wird,
dieser Gegenstand mit einer zweiten Transportgeschwindigkeit (v2) transportiert wird,
wobei die zweite Transportgeschwindigkeit geringer als die erste Transportgeschwindigkeit ist.

9. Verfahren nach einem der Ansprüche 1 bis 8,
**dadurch gekennzeichnet, dass**
- für jeden zu wiegenden Gegenstand, den die in der ersten Betriebsart betriebene Waage (Waa) gewogen hat,
- nach diesem Wiegen in Abhängigkeit von dem in der ersten Betriebsart gewonnenen Messwert entschieden wird, ob der Gegenstand die erste Eigenschaft besitzt oder nicht, und
- dann, wenn der in der ersten Betriebsart gewogene Gegenstand die erste Eigenschaft nicht besitzt,
- die in der zweiten Betriebsart betriebene Waage (Waa) den Gegenstand wiegt.

10. Verfahren nach Anspruch 9,
**dadurch gekennzeichnet, dass**
in einem ersten Schritt mehrere Gegenstände von der in der ersten Betriebsart betriebenen Waage (Waa) gewogen werden (Schritt S2),
anschließend geprüft wird, ob jeder zu wiegende Gegenstand die erste Eigenschaft besitzt oder nicht, und dann, wenn mindestens ein zu wiegender Gegenstand die erste Eigenschaft nicht besitzt, die Waage (Waa)
- in die zweite Betriebsart umgeschaltet wird und
- jeden Gegenstand, der die erste Eigenschaft nicht besitzt, in der zweiten Betriebsart wiegt (Schritt S5).

11. Verfahren nach einem der Ansprüche 1 bis 10,
**dadurch gekennzeichnet, dass**
für jeden zu wiegenden Gegenstand (Ps(1), Ps(2), ...) jeweils ein Zielpunkt vorgegeben wird, an den dieser Gegenstand zu transportieren ist,
ermittelt wird, welches Ist-Beförderungsentgelt für den Transport dieses Gegenstands jeweils entrichtet wurde,
mindestens ein weiterer physikalischer Parameter vorgegeben wird,
für jeden vorgegebenen Parameter und für jeden zu wiegenden Gegenstand gemessen wird, welchen Wert dieser Parameter für diesen Gegenstand annimmt,
abhängig von dem ermittelten Ist-Beförderungsentgelt und dem mindestens einen gemessenen weiteren Parameterwert automatisch entschieden wird, ob der Gegenstand mit einer vorgegebenen Toleranz gewogen wird oder nicht, und
der Schritt, dass die in der zweiten Betriebsart betriebene Waage (Waa) den Gegenstand wiegt, nur dann durchgeführt wird, wenn zuvor
- festgestellt wurde, dass der Gegenstand nicht die erste Eigenschaft besitzt, und
- entschieden wurde, dass der Gegenstand gewogen wird.

12. Vorrichtung zum Wiegen mindestens eines Gegenstands
(Ps(1), Ps(2), ...),
wobei die Vorrichtung
- eine Waage (Waa) und
- eine Entscheidungseinheit (EE)
umfasst,
die Waage (Waa) mindestens eine Wiegezelle (WZ) umfasst, die Entscheidungseinheit (EE) dazu ausgestaltet ist, automatisch zu entscheiden, ob das Gewicht (Gew(1), Gew(2), ...) eines Gegenstands in die erste Gewichtsklasse (Ps(1), Ps(2), ...) fällt oder nicht,
die Waage (Waa) in einer ersten Betriebsart und in einer zweiten Betriebsart betreibbar ist,
die Waage (Waa)
- beim Betrieb in der ersten Betriebsart jeden Gegenstand, der eine erste vorgegebene physikalische Eigenschaft aufweist, mit einer vorgegebenen ersten Toleranz zu wiegen vermag und
- beim Betrieb in der zweiten Betriebsart jeden Gegenstand, der eine zweite vorgegebene physikalische Eigenschaft aufweist, mit einer vorgegebenen zweiten Toleranz zu wiegen vermag,
die Entscheidungseinheit (EE) dazu ausgestaltet ist, automatisch
- zu prüfen, ob ein zu wiegender Gegenstand die erste Eigenschaft besitzt oder nicht, und
- zu prüfen, ob ein zu wiegender Gegenstand die zweite Eigenschaft besitzt oder nicht,
und
die Vorrichtung dazu ausgestaltet ist, für jeden zu wiegenden Gegenstand (Ps(1), Ps(2), ...) mindestens einen der beiden Schritte durchzuführen,
- automatisch zu prüfen, ob der Gegenstand die erste Eigenschaft besitzt oder nicht (Schritt S4), oder
- mit der in der ersten Betriebsart betriebene Waage (Waa) den Gegenstand zu wiegen (Schritt S2),
wobei die Vorrichtung das Wiegen eines zu wiegenden Gegenstands (Ps(1), Ps(2), ...) mittels der in der ersten Betriebsart betriebenen Waage immer dann durchführt, wenn
- die Entscheidungseinheit (EE) entschieden oder vor dem Wiegen in der ersten Betriebsart vorhergesagt hat, dass der Gegenstand die erste Eigenschaft besitzt, oder
- der Schritt zu prüfen, ob der Gegenstand die erste Eigenschaft besitzt oder nicht, vor dem Wiegen in der ersten Betriebsart (Schritt S2) nicht durchgeführt wurde, und
die Vorrichtung weiterhin dazu ausgestaltet ist, dann, wenn
- die Vorrichtung den Schritt, dass die Waage (Waa) in der ersten Betriebsart den Gegenstand wiegt, nicht durchgeführt hat oder
- die Entscheidungseinheit (EE) nach dem Wiegen des Gegenstands in der ersten Betriebsart entschieden hat, dass der Gegenstand die erste Eigenschaft nicht besitzt,
die Waage (Waa) in die zweite Betriebsart umzuschalten, die Vorrichtung weiterhin dazu ausgestaltet ist, jeden zu wiegenden Gegenstand (Ps(1), Ps(2), ...), der nicht in der ersten Betriebsart gewogen wurde oder die erste Eigenschaft nicht besitzt,
mittels der in der zweiten Betriebsart betriebenen Waage (Waa) zu wiegen und
die Vorrichtung weiterhin dazu ausgestaltet ist, für jeden zu wiegenden Gegenstand (Ps(1), Ps(2), ...) als dessen Gewicht (Gew(1), Gew (2), ...)
- dann der in der ersten Betriebsart gemessene Messwert (Gew.1(1), Gew.1(2), ...) zu verwenden, wenn die Entscheidungseinheit entschieden hat, dass der Gegenstand die erste Eigenschaft besitzt, und
- dann der in der zweiten Betriebsart gemessene Messwert (Gew.2(1), Gew.2(2), ...) zu verwenden, wenn die Entscheidungseinheit entschieden hat, dass der Gegenstand die zweite Eigenschaft besitzt.

13. Vorrichtung nach Anspruch 12,
**dadurch gekennzeichnet, dass**
die Vorrichtung eine Transporteinrichtung (TE) besitzt,
die Transporteinrichtung (TE) dazu ausgestaltet ist, einen zu wiegenden Gegenstand (Ps(1), Ps(2), ...) wahlweise in einer ersten Transportgeschwindigkeit oder in einer zweiten Transportgeschwindigkeit über die Waage (Waa) hinweg zu transportieren,
wobei die zweite Transportgeschwindigkeit geringer als die erste Transportgeschwindigkeit ist, und
die Vorrichtung dazu ausgestaltet ist, einen zu wiegenden Gegenstand mittels der Transporteinrichtung (TE)
- in der ersten Transportgeschwindigkeit über der in der ersten Betriebsart betriebenen Waage (Waa) und
- in der zweiten Transportgeschwindigkeit über die in der zweiten Betriebsart betriebenen Waage (Waa) hinweg zu transportieren,
ohne den Gegenstand abzustoppen, und
die Waage (Waa) dazu ausgestaltet ist, einen über die Waage (Waa) hinweg transportierten Gegenstand zu wiegen.
